(19) Europäisches Patentamt
European Patent Office
Office européen des brevets

(11) EP 4 692 160 A1

(12) EUROPEAN PATENT APPLICATION
published in accordance with Art. 153(4) EPC

(43) Date of publication:
11.02.2026 Bulletin 2026/07

(21) Application number: 24780682.1

(22) Date of filing: 28.03.2024

(51) International Patent Classification (IPC):
*C08G 63/16* (2006.01) *C08G 63/185* (2006.01)
*C09J 11/06* (2006.01) *C09J 167/00* (2006.01)

(52) Cooperative Patent Classification (CPC):
C08G 63/16; C08G 63/185; C09J 11/06;
C09J 167/00

(86) International application number:
PCT/JP2024/012740

(87) International publication number:
WO 2024/204583 (03.10.2024 Gazette 2024/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.03.2023 JP 2023059337
31.03.2023 JP 2023059338

(71) Applicant: Mitsubishi Chemical Corporation
Tokyo 100-8251 (JP)

(72) Inventor: SAKAMOTO, Kento
Tokyo 100-8251 (JP)

(74) Representative: Hoffmann Eitle
Patent- und Rechtsanwälte PartmbB
Arabellastraße 30
81925 München (DE)

# (54) ACTIVE ENERGY RAY-CURABLE COMPOSITION, ADHESIVE, AND ADHESIVE SHEET

(57) The following is provided as an active energy ray-curable composition having excellent pressure-sensitive adhesive force, holding force, and thermal stability. An active energy ray-curable composition containing a polyester (A) having a structural unit derived from a polyvalent carboxylic acid (α) and a structural unit derived from a polyhydric alcohol (β), wherein the polyester (A) further contains a polyester (A1) having a structural unit derived from a compound (B) having a photoreactive group.

EP 4 692 160 A1

## Description

### Technical Field

The present disclosure relates to an active energy ray-curable composition, a pressure-sensitive adhesive that is a cured product of the active energy ray-curable composition, and a pressure-sensitive adhesive sheet. In particular, the present disclosure relates to an active energy ray-curable composition, a pressure-sensitive adhesive, and a pressure-sensitive adhesive sheet, in which the active energy ray-curable composition has excellent curability by an active energy ray without having an unsaturated group, and furthermore, the pressure-sensitive adhesive sheet produced using the active energy ray-curable composition has excellent heat resistance, pressure-sensitive adhesive force, and holding force.

### Background Art

Polyesters have excellent heat resistance, chemical resistance, durability, and mechanical strength and thus have been used in a wide range of applications, such as films, PET bottles, fibers, toners, electrical components, adhesives, and pressure-sensitive adhesives. In addition, polyesters are known to have high polarity due to the polymer structures and thus to exhibit excellent pressure-sensitive adhesion to polar polymers, such as polyester, poly(vinyl chloride), polyimide, and epoxy resins, and metal materials, such as copper and aluminum.

As pressure-sensitive adhesives used for pressure-sensitive adhesive sheets, such as pressure-sensitive adhesive labels and pressure-sensitive adhesive tapes, solvent-type pressure-sensitive adhesives in which a pressure-sensitive adhesive polymer is dissolved in a solvent have been used in the related art. In recent years, attention has been paid to solvent-free pressure-sensitive adhesives using no organic solvent to regulate volatile organic compounds (VOCs) and reduce greenhouse gas emissions for the reduction of environmental load. Examples of solvent-free pressure-sensitive adhesives include aqueous pressure-sensitive adhesives obtained by dispersing or dissolving a pressure-sensitive adhesive in water, and active energy ray-curable pressure-sensitive adhesives that are cured by an active energy ray, such as an ultraviolet ray. Aqueous pressure-sensitive adhesives have problems in performance. For example, as compared with solvent-type pressure-sensitive adhesives, a large amount of energy may be required to be used for volatilization of water, and water resistance is inferior to that of solvent-type pressure-sensitive adhesives due to the effect of an emulsifier contained in a main agent. In addition, in active energy ray-curable pressure-sensitive adhesives, to increase the cohesive force of the pressure-sensitive adhesive, an unsaturated group, which reacts by an active energy ray and serves as a crosslinking point, needs to be incorporated into the structure, or a compound having an unsaturated group needs to be contained in the pressure-sensitive adhesive. Thus, there are problems in thermal stability, such as an increase in viscosity or occurrence of gelation due to the reaction of the unsaturated group by heating in hot-melt coating. Therefore, solvent-free pressure-sensitive adhesives used for hot-melt coating are required to have high thermal stability and pressure-sensitive adhesive performance equal to or higher than that of solvent-type pressure-sensitive adhesives.

Patent Literature 1 discloses a photocrosslinkable polyester-based pressure-sensitive adhesive composition containing a polyester having an unsaturated group, a photoinitiator, and a crosslinker.

Patent Literature 2 discloses a photocrosslinkable pressure-sensitive adhesive for optical members, the pressure-sensitive adhesive containing a polyester, an unsaturated group-containing compound, a polymerization initiator, and a crosslinker.

Patent Literature 3 discloses a radiation-curable re-peelable pressure-sensitive adhesive sheet containing a polyester, a radiation-curable resin having an unsaturated group, a radiation reaction initiator, and a crosslinker.

Patent Literature 4 discloses an ultraviolet-curable composition containing an epoxidized oil and/or fat having an ultraviolet active site, and a polyvalent carboxylic acid.

### Citation List

#### Patent Literature

Patent Literature 1: JP 2009-102476 A
Patent Literature 2: JP 2009-209279 A
Patent Literature 3: JP 2010-59336 A
Patent Literature 4: JP 2022-535379 A

Summary

Technical Problem

In recent years, there has been a demand for global environmentfriendly pressure-sensitive adhesives, such as biomass pressure-sensitive adhesives using a plant-derived raw material and solvent-free pressure-sensitive adhesives using no organic solvent, to reduce the environmental load. Thermosetting pressure-sensitive adhesives that have been used in the art are composed of a petroleum raw material and further diluted with an organic solvent before use, and thus there have been problems of environmental load due to the generation of VOCs that may cause environmental pollution and the emission of $CO_2$ during combustion disposal.
In addition, in active energy ray-curable pressure-sensitive adhesives used in the art, it is necessary to introduce an unsaturated group as an active energy ray-curable component into the pressure-sensitive adhesive, to blend an unsaturated group-containing compound as an active energy ray-curable component, and for the active energy ray-curable pressure-sensitive adhesive to further contain a thermosetting crosslinker or the like. The reaction of the unsaturated group or the crosslinker component proceeds by heat. Thus, in the application of a solvent-free pressure-sensitive adhesive involving a hightemperature heating process, such as hot melt, there are problems in thermal stability, such as an increase in viscosity, gelation, and thermal decomposition in the production process, making it difficult to use the solvent-free pressure-sensitive adhesive.
For example, Patent Literature 1 discloses a technique relating to a polyester-based photocrosslinkable pressure-sensitive adhesive composition, in which the polyester-based resin has a (meth)acrylatederived unsaturated group as a photocrosslinkable component. Thus, problems remain in thermal stability.
Patent Literature 2 discloses a technique relating to a photocrosslinkable and/or thermally crosslinkable pressure-sensitive adhesive for optical members, in which an unsaturated group-containing compound and a thermosetting crosslinker are used for a pressure-sensitive adhesive composition, and thus crosslinking proceeds by heat. Thus, there are problems in thermal stability, and there is room for improvement in hot melt coating suitability.
Patent Literature 3 discloses a technique relating to a radiation-curable re-peelable pressure-sensitive adhesive sheet, in which a large amount of a radiation-curable resin having an unsaturated group is contained. Thus, problems remain in thermal stability and pressure-sensitive adhesive force.
Patent Literature 4 discloses a technique relating to an ultraviolet-curable composition containing an epoxidized oil and/or fat having an ultraviolet active site, and a polyvalent carboxylic acid, in which although an unsaturated group is not contained as an active energy ray-curable component, an epoxy group is contained and thus reacts with a carboxy group by heat or ring-opening polymerization of the epoxy group proceeds by heat. Thus, problems remain in thermal stability at high temperatures.
Under such a circumstance, the present disclosure provides an active energy ray-curable composition, a pressure-sensitive adhesive, and a pressure-sensitive adhesive sheet, which have excellent pressure-sensitive adhesive force, holding force, and thermal stability.

Solution to Problem

As a result of diligent studies in view of such circumstances, the present inventors have found that an active energy ray-curable composition containing a polyester having a structural unit derived from a polyvalent carboxylic acid, a structural unit derived from a polyhydric alcohol, and a structural unit derived from a compound having a photoreactive group has excellent active energy ray curability without containing an unsaturated group, which causes a decrease in thermal stability, and the composition has excellent thermal stability, pressure-sensitive adhesive force, and holding force.
As a result of diligent studies in view of such circumstances, the present inventors have also found that an active energy ray-curable composition containing a polyester having a structural unit derived from a polyvalent carboxylic acid and a structural unit derived from a polyhydric alcohol, and a compound having a photoreactive group has excellent active energy ray curability without containing an unsaturated group, which causes a decrease in thermal stability, and the active energy ray-curable pressure-sensitive adhesive composition has excellent thermal stability, pressure-sensitive adhesive force, and holding force.
That is, the gist of the present disclosure is [1] to [16] described below.

[1] An active energy ray-curable composition containing a polyester (A) having a structural unit derived from a polyvalent carboxylic acid ($\alpha$) and a structural unit derived from a polyhydric alcohol ($\beta$), wherein
the polyester (A) further contains a polyester (A1) having a structural unit derived from a compound (B) having a photoreactive group.
[2] An active energy ray-curable composition containing a polyester (A) having a structural unit derived from a polyvalent carboxylic acid ($\alpha$) and a structural unit derived from a polyhydric alcohol ($\beta$), and a compound (B) having a

photoreactive group, wherein
a content of a polymerizable unsaturated group-containing compound (C) contained in the active energy ray-curable composition is less than 15 parts by mass per 100 parts by mass of the polyester (A).
[3] The active energy ray-curable composition according to [1], further containing a polyester (A2) having a structural unit derived from a polyvalent carboxylic acid ($\alpha$) and a structural unit derived from a polyhydric alcohol ($\beta$), and not having a structural unit derived from a compound (B) having a photoreactive group.
[4] The active energy ray-curable composition according to [1] or [3], wherein the compound (B) having a photoreactive group is a compound (b1) having a hydrogen abstraction type photoreactive group and/or a compound (b2) having a cleavage type photoreactive group.
[5] The active energy ray-curable composition according to any of [1], [3], and [4], wherein the structural unit derived from the compound (B) having a photoreactive group is incorporated into a main chain of the polyester (A1) via an ester bond.
[6] The active energy ray-curable composition according to any of [1] and [3] to [5], wherein the compound (B) having a photoreactive group is a polyvalent carboxylic acid ($\alpha$).
[7] The active energy ray-curable composition according to [2], wherein the compound (B) having a photoreactive group is a hydrogen abstraction type photopolymerization initiator.
[8] The active energy ray-curable composition according to [2] or [7], wherein the compound (B) having a photoreactive group does not have a carboxy group or a hydroxy group as a functional group.
[9] The active energy ray-curable composition according to any of [1] to [8], wherein the polyester (A) has a glass transition temperature of - 80 to 30°C.
[10] The active energy ray-curable composition according to any of [1] to [9], wherein the polyester (A) has a weight average molecular weight of 5000 to 500000.
[11] The active energy ray-curable composition according to any of [1] to [10], wherein the polyester (A) has an unsaturated group concentration of 1 mmol/g or less.
[12] The active energy ray-curable composition according to any of [1] to [11], wherein a rate of change in melt viscosity before and after heating at 200°C for 3 hours is from 20 to 500%.
[13] The active energy ray-curable composition according to any of [1] to [12], wherein a content of an organic solvent in the active energy ray-curable composition is less than 10 mass%.
[14] A pressure-sensitive adhesive being a cured product of the active energy ray-curable composition according to any of [1] to [13].
[15] The pressure-sensitive adhesive according to [14], wherein the pressure-sensitive adhesive has a gel fraction of 1 to 100%.
[16] A pressure-sensitive adhesive sheet containing the pressure-sensitive adhesive according to [14] or [15].

Advantageous Effects

The active energy ray-curable composition of the present disclosure can form a pressure-sensitive adhesive having excellent active energy ray curability, pressure-sensitive adhesive force, holding force, and thermal stability, and the pressure-sensitive adhesive is particularly effective as a solvent-free pressure-sensitive adhesive used for pressure-sensitive adhesive tapes and pressure-sensitive adhesive labels.
In general, an active energy ray-curable composition is required to contain an unsaturated group-containing compound as a component curable by an active energy ray in the composition for increasing active energy ray curability, pressure-sensitive adhesive force, and holding force.
However, when an unsaturated group is present, polymerization is initiated by heat. Thus, in a hot melt process of a solvent-free pressure-sensitive adhesive, in which the resin needs to be melted at a high temperature, the active energy ray-curable composition containing an unsaturated group-containing compound has problems in thermal stability, such as occurrence of viscosity increase or gelation, and cannot be used.
In the present disclosure, the use of a polyester having a photoreactive group provides excellent active energy ray curability without containing an unsaturated group, which serves as a crosslinking point by an active energy ray, and further provides excellent thermal stability, pressure-sensitive adhesive force, and holding force.
Furthermore, in the present disclosure, the active energy ray-curable composition contains a polyester and a compound having a photoreactive group. Thus, the composition has excellent active energy ray curability without containing an unsaturated group or a crosslinker, which serves as a crosslinking point by an active energy ray and which has been essential in the art, and further has excellent thermal stability, pressure-sensitive adhesive force, and holding force.

Description of Embodiments

Hereinafter, the configurations of the present disclosure will be described in detail, but these illustrate examples of desirable embodiments.

In the present disclosure, the term "analog(s)" following the name of a compound means a concept including the compound and a derivative of the compound. For example, the term "carboxylic acid analog(s)" includes a carboxylic acid, and derivatives of the carboxylic acid, such as a carboxylate salt, a carboxylic anhydride, a carboxylic acid halide, and a carboxylic ester.

In the present disclosure, the term "structural unit derived from a compound" means not only a structural unit of the compound but also a structural unit chemically derived from the compound as a structural unit other than the structural unit of the compound.

In addition, the expression "X and/or Y (X and Y are optional configurations)" means at least one of X and Y, i.e., three ways of X only, Y only, and X and Y.

An active energy ray-curable composition according to an embodiment of the present disclosure (hereinafter referred to as "the present composition 1") contains a polyester (A) having a structural unit derived from a polyvalent carboxylic acid ($\alpha$) and a structural unit derived from a polyhydric alcohol ($\beta$), wherein the polyester (A) is a polyester (A1) further having a structural unit derived from a compound (B) having a photoreactive group.

An active energy ray-curable composition according to another embodiment of the present disclosure (hereinafter referred to as "the present composition 2") contains a polyester (A) having a structural unit derived from a polyvalent carboxylic acid ($\alpha$) and a structural unit derived from a polyhydric alcohol ($\beta$), and a compound (B) having a photoreactive group, wherein the content of a polymerizable unsaturated group-containing compound (C) contained in the present composition 2 is less than 15 parts by mass per 100 parts by mass of the polyester (A).

Hereinafter, the present composition 1 and the present composition 2 may be collectively referred to simply as "the present composition".

First, the polyester (A) will be described.

Polyester (A)

As described above, the polyester (A) contains a structural unit derived from a polyvalent carboxylic acid ($\alpha$) and a structural unit derived from a polyhydric alcohol ($\beta$) in the molecule. Such a polyester (A) is usually obtained by ester-bonding of a polyvalent carboxylic acid ($\alpha$) and a polyhydric alcohol ($\beta$).

Examples of the polyester (A) include a polyester (A1) having a structural unit derived from a polyvalent carboxylic acid ($\alpha$), a structural unit derived from a polyhydric alcohol ($\beta$), and a structural unit derived from a compound (B) having a photoreactive group, and a polyester (A2) having a structural unit derived from a polyvalent carboxylic acid ($\alpha$) and a structural unit derived from a polyhydric alcohol ($\beta$) and not having a structural unit derived from a compound (B) having a photoreactive group.

The present composition 1 contains the polyester (A1), and incorporation of the polyester (A1) provides excellent active energy ray curability, pressure-sensitive adhesive force, holding force, tackiness, and thermal stability.

The present composition 1 preferably further contains a polyester-based resin (A2) from the viewpoints of pressure-sensitive adhesive force, holding force, and thermal stability.

The present composition 2 contains the polyester (A), and the polyester (A) contained in the present composition 2 is preferably a polyester (A2) containing no photoreactive group.

The content of the polyester (A) is 50 mass% or more, more preferably from 60 to 99.5 mass%, even more preferably from 70 to 99 mass%, particularly preferably from 80 to 98.5 mass%, and especially preferably from 85 to 98 mass%, of the entirety of the present composition.

The content of the polyester (A1) is usually 50 mass% or more, more preferably 60 mass% or more, even more preferably 70 mass%, and particularly preferably 80 mass% or more, or may be 100 mass%, of the polyester (A).

When the present composition contains the polyester (A1) and the polyester (A2), the mass ratio [(A1)/(A2)] is usually from 99/1 to 1/99, preferably from 90/10 to 5/95, more preferably from 80/20 to 10/90, even more preferably from 70/30 to 15/85, and particularly preferably from 60/40 to 20/80. When the mass ratio falls within the above range, the present composition tends to have excellent active energy ray curability, pressure-sensitive adhesive force, holding force, and thermal stability.

Polyvalent Carboxylic Acid ($\alpha$)

Examples of the polyvalent carboxylic acid ($\alpha$) include an aliphatic polyvalent carboxylic acid ($\alpha 1$), an aromatic polyvalent carboxylic acid ($\alpha 2$), and an alicyclic polyvalent carboxylic acid ($\alpha 3$). One type or two or more types of the polyvalent carboxylic acids ($\alpha$) can be used. Among these, an aliphatic polyvalent carboxylic acid ($\alpha 1$) is preferable from

the viewpoint of excellent active energy curability and pressure-sensitive adhesive force, and from the viewpoint that the melt viscosity can be reduced when the molecular weight is increased, resulting in excellent coating suitability.

Examples of the aliphatic polyvalent carboxylic acid (α1) include saturated aliphatic dicarboxylic acids (α1-1), such as malonic acid analogs, succinic acid analogs, glutaric acid analogs, adipic acid analogs, trimethyladipic acid analogs, pimelic acid analogs, 3-methylglutaric acid analogs, 2,2-dimethylglutaric acid analogs, azelaic acid analogs, sebacic acid analogs, thiodipropionic acid analogs, diglycolic acid analogs, 1,9-nonanedicarboxylic acid analogs, and hydrogenated dimer acid analogs obtained by hydrogenation of dimer acid analogs derived by dimerization of an unsaturated monocarboxylic acid, such as oleic acid, linoleic acid, linolenic acid, or erucic acid; and unsaturated aliphatic dicarboxylic acids (α1-2), such as fumaric acid analogs, maleic acid analogs, itaconic acid analogs, and dimer acid analogs derived by dimerization of an unsaturated monocarboxylic acid, such as oleic acid, linoleic acid, linolenic acid, or erucic acid. Among these, from the viewpoint of excellent thermal stability, a saturated aliphatic dicarboxylic acid (α1-1) is preferably contained. Among others, from the viewpoint of excellent active energy ray curability, pressure-sensitive adhesive force, and coating suitability, succinic acid analogs, adipic acid analogs, azelaic acid analogs, sebacic acid analogs, or hydrogenated dimer acid analogs are more preferable.

Examples of the aromatic polyvalent carboxylic acid (α2) include aromatic dicarboxylic acid analogs, such as terephthalic acid analogs, isophthalic acid analogs, orthophthalic acid analogs, naphthalenedicarboxylic acid analogs, biphenyldicarboxylic acid analogs, furandicarboxylic acid analogs, and thiophenedicarboxylic acid analogs; and trivalent or higher valent aromatic polyvalent carboxylic acid analogs, such as trimellitic acid analogs, trimesic acid analogs, ethylene glycol bis(anhydrotrimellitate) analogs, glycerol tris(anhydrotrimellitate) analogs, pyromellitic acid analogs, oxydiphthalic acid analogs, 3,3',4,4'-benzophenone tetracarboxylic acid analogs, 3,3',4,4'-Biphenyltetracarboxylic acid analogs, 3,3',4,4'-Biphenylsulfonetetracarboxylic acid analogs, 4,4'-(hexafluoroisopropylidene)diphthalic acid analogs, and 2,2'-bis[(dicarboxyphenoxy)phenyl]propane analogs. Among these, from the viewpoints of excellent hydrolysis resistance and cohesive force, aromatic dicarboxylic acid analogs are preferable, and terephthalic acid analogs, isophthalic acid analogs, orthophthalic acid analogs, naphthalenedicarboxylic acid analogs, or furandicarboxylic acid is more preferable. From the viewpoints of a decrease in crystallinity of the polyester and excellent tackiness and pressure-sensitive adhesive force, isophthalic acid analogs, orthophthalic acid analogs, or furandicarboxylic acid analogs are particularly preferable.

The aromatic polyvalent carboxylic acid (α2) also includes some of the compounds (B) having a photoreactive group described below.

Examples of the alicyclic polyvalent carboxylic acid (α3) include cyclohexanedicarboxylic acid analogs, cyclohexanediacetic acid analogs, tetrahydrophthalic acid analogs, and hexahydrophthalic acid analogs.

When the polyester (A) has a structural unit derived from an aliphatic polyvalent carboxylic acid (α1), the content of the structural unit derived from the aliphatic polyvalent carboxylic acid (α1) per structural unit derived from the polyvalent carboxylic acid (α) is preferably 20 mol% or more, more preferably from 30 to 100 mol%, even more preferably from 40 to 98 mol%, particularly preferably from 50 to 95 mol%, especially preferably from 60 to 93 mol%, and most preferably from 70 to 90 mol%. When the content of the structural unit derived from the aliphatic polyvalent carboxylic acid (α1) is too low, the active energy ray curability tends to decrease, the melt viscosity tends to increase and the hot melt coating suitability tends to deteriorate, and the glass transition temperature tends to increase, resulting in insufficient pressure-sensitive adhesive force and tackiness. When the content is too high, the cohesive force tends to be insufficient, resulting in insufficient holding force.

When the polyester (A) has a structural unit derived from a saturated aliphatic dicarboxylic acid (α1-1), the content of the structural unit derived from the saturated aliphatic dicarboxylic acid (α1-1) per structural unit derived from the polyvalent carboxylic acid (α) is preferably 20 mol% or more, more preferably from 30 to 100 mol%, even more preferably from 40 to 98 mol%, particularly preferably from 50 to 95 mol%, especially preferably from 60 to 93 mol%, and most preferably from 70 to 90 mol%. When the content of the structural unit derived from the saturated aliphatic dicarboxylic acid (α1-1) is too low, the active energy ray curability tends to decrease, the melt viscosity tends to increase and the hot melt coating suitability tends to deteriorate, and the glass transition temperature tends to increase, resulting in insufficient pressure-sensitive adhesive force and tackiness. When the content is too high, the cohesive force tends to be insufficient, resulting in insufficient holding force.

When the polyester (A) has a structural unit derived from an unsaturated aliphatic dicarboxylic acid (α1-2), the content of the structural unit derived from the saturated aliphatic dicarboxylic acid (α1-2) per structural unit derived from the polyvalent carboxylic acid (α) is preferably 30 mol% or less, more preferably 15 mol% or less, even more preferably 10 mol% or less, particularly preferably 5 mol% or less, especially preferably 3 mol% or less, and most preferably 0 mol%. When the content of the structural unit derived from the unsaturated aliphatic dicarboxylic acid (α1-2) is too high, the thermal stability tends to be insufficient.

When the polyester (A) has a structural unit derived from an aromatic polyvalent carboxylic acid (α2), the content of the structural unit derived from the aromatic polyvalent carboxylic acid (α2) per structural unit derived from the polyvalent carboxylic acid (α) is preferably 80 mol% or less, more preferably from 1 to 60 mol%, even more preferably from 3 to 50

mol%, particularly preferably from 5 to 40 mol%, and especially preferably from 10 to 30 mol%. When the content of the structural unit derived from the aromatic polyvalent carboxylic acid (α2) is too low, the cohesive force tends to be insufficient, resulting in insufficient holding force, heat resistance, and moist-heat resistance. When the content is too high, the active energy ray curability tends to decrease, the melt viscosity tends to increase and the hot melt coating suitability tends to deteriorate, and the glass transition temperature tends to increase, resulting in insufficient tackiness and pressure-sensitive adhesive force.

When the polyester (A) has a structural unit derived from an alicyclic polyvalent carboxylic acid (α3), the content of the structural unit derived from the alicyclic polyvalent carboxylic acid (α3) per structural unit derived from the polyvalent carboxylic acid (α) is preferably 80 mol% or less, more preferably from 1 to 60 mol%, even more preferably from 3 to 50 mol%, particularly preferably from 5 to 40 mol%, and especially preferably from 10 to 30 mol%. When the content of the structural unit derived from the alicyclic polyvalent carboxylic acid (α3) is too low, the cohesive force tends to be insufficient, resulting in insufficient holding force, heat resistance, and moist-heat resistance. When the content is too high, the active energy ray curability tends to decrease, the melt viscosity tends to increase and the hot melt coating suitability tends to deteriorate, and the glass transition temperature tends to increase, resulting in insufficient tackiness and pressure-sensitive adhesive force.

The content ratio (molar ratio) of the structural unit derived from the aliphatic polyvalent carboxylic acid (α1) to the structural unit derived from the aromatic polyvalent carboxylic acid (α2) in the structural unit derived from the polyvalent carboxylic acid (α), i.e., the ratio of the structural unit derived from the aliphatic polyvalent carboxylic acid (α1)/the structural unit derived from the aromatic polyvalent carboxylic acid (α2) is preferably from 100/0 to 20/80, more preferably from 99/1 to 40/60, particularly preferably from 97/3 to 50/50, even more preferably from 95/5 to 60/40, especially preferably from 93/7 to 65/35, and most preferably from 90/10 to 70/30.

The content ratio (molar ratio) of the structural unit derived from the aliphatic polyvalent carboxylic acid (α1) to the structural unit derived from the alicyclic polyvalent carboxylic acid (α3) in the structural unit derived from the polyvalent carboxylic acid (α), i.e., the ratio of the structural unit derived from the aliphatic polyvalent carboxylic acid (α1)/the structural unit derived from the alicyclic polyvalent carboxylic acid (α3) is preferably from 100/0 to 20/80, more preferably from 99/1 to 40/60, particularly preferably from 97/3 to 50/50, even more preferably from 95/5 to 60/40, especially preferably from 93/7 to 65/35, and most preferably from 90/10 to 70/30.

The polyester (A) may contain, as the structural unit derived from the polyvalent carboxylic acid (α), a structural unit derived from an aromatic dicarboxylic acid having a sulfonic acid group, such as sulfoterephthalic acid analogs, 5-sulfoisophthalic acid analogs, 4-sulfophthalic acid analogs, 4-sulfonaphthalene-2,7-dicarboxylic acid analogs, and 5(4-sulfophenoxy)isophthalic acid analogs, and a structural unit derived from an aromatic dicarboxylic acid salt having a sulfonate group, such as a metal salt or an ammonium salt of the aromatic dicarboxylic acid having a sulfonic acid group. However, from the viewpoint of the moist-heat resistance of the polyester (A), the content is preferably 10 mol% or less, more preferably 5 mol% or less, particularly preferably 3 mol% or less, even more preferably 1 mol% or less, and most preferably 0 mol%, per structural unit derived from the polyvalent carboxylic acid (α).

Polyhydric Alcohol (β)

Examples of the polyhydric alcohol (β) include an aliphatic polyhydric alcohol (β1), an alicyclic polyhydric alcohol, and an aromatic polyhydric alcohol. One type or two or more types of the polyhydric alcohol (β) can be used. Among these, an aliphatic polyhydric alcohol (β1) is preferable from the viewpoint of excellent active energy curability and pressure-sensitive adhesive force, and from the viewpoint that the melt viscosity can be reduced when the molecular weight is increased, resulting in excellent coating suitability.

Examples of the aliphatic polyhydric alcohol (β1) include linear aliphatic polyhydric alcohols (β1-1), such as ethylene glycol, 1,3-propanediol, 1,4-butanediol, 1,5-pentanediol, 1,6-hexanediol, 1,9-nonanediol, and 1,10-decanediol; and branched aliphatic polyhydric alcohols (β1-2) having a hydrocarbon group in at least one side chain, such as 1,2-propylene glycol, 2-methyl-1,3-propanediol, neopentyl glycol, 3-methyl-1,5-pentanediol, 2-ethyl-2-butylpropanediol, a dimer diol that is a reduced product of a dimer acid analog derived by dimerization of an unsaturated monocarboxylic acid such as oleic acid, linoleic acid, linolenic acid, or erucic acid, 2,4-diethyl-1,5-pentanediol, 2,2,4-trimethyl-1,3-pentanediol, glycerin, trimethylolethane, trimethylolpropane, and pentaerythritol.

Among these, from the viewpoints of lowering the glass transition temperature and providing excellent pressure-sensitive adhesive force and tackiness, a linear aliphatic polyhydric alcohol (β1-1) is preferable, ethylene glycol, 1,3-propanediol, 1,4-butanediol, or 1,5-pentanediol is more preferable, and ethylene glycol, 1,3-propanediol, or 1,4-butanediol is particularly preferable.

Among these, from the viewpoints of excellent active energy ray curability, hydrolysis resistance, and excellent tackiness due to a reduction in crystallinity, a branched aliphatic polyhydric alcohol (β1-2) having a hydrocarbon group in at least one side chain is preferable, and 2-methyl-1,3-propanediol, neopentyl glycol, 3-methyl-1,5-pentanediol, or a dimer diol is particularly preferable.

When the polyester (A) has the structural unit derived from the linear aliphatic polyhydric alcohol (β1-1), the content of the structural unit derived from the linear aliphatic polyhydric alcohol (β1-1) per structural unit derived from the polyhydric alcohol (β) is preferably from 10 to 100 mol%, more preferably from 20 to 95 mol%, particularly preferably from 30 to 90 mol%, even more preferably from 35 to 85 mol%, and especially preferably from 40 to 80 mol%. When the content of the structural unit derived from the linear aliphatic polyhydric alcohol (β1-1) is too low, the pressure-sensitive adhesive force, tackiness, and substrate adherence tend to be insufficient. When the content is too high, the crystallinity of the polyester tends to increase, resulting in insufficient pressure-sensitive adhesive force, tackiness, and active energy ray curability.

When the polyester (A) has the structural unit derived from the branched aliphatic polyhydric alcohol (β1-2) having a hydrocarbon group in at least one side chain, the content of the structural unit derived from the branched aliphatic polyhydric alcohol (β1-2) per structural unit derived from the polyhydric alcohol (β) is preferably from 5 to 100 mol%, more preferably from 10 to 90 mol%, particularly preferably from 15 to 80 mol%, even more preferably from 20 to 70 mol%, and especially preferably from 25 to 60 mol%. When the content of the structural unit derived from the branched aliphatic polyhydric alcohol (β1-2) is too low, the crystallinity of the polyester tends to increase, resulting in insufficient pressure-sensitive adhesive force, tackiness, and active energy ray curability. When the content is too high, the pressure-sensitive adhesive force, tackiness, and substrate adherence tend to be insufficient.

The content ratio (molar ratio) of the structural unit derived from the linear aliphatic polyhydric alcohol (β1-1) to the structural unit derived from the branched aliphatic polyhydric alcohol (β1-2) in the structural unit derived from the polyhydric alcohol (β), i.e., the ratio of the structural unit derived from the linear aliphatic polyhydric alcohol (β1-1)/the structural unit derived from the branched aliphatic polyhydric alcohol (β1-2) is preferably from 100/0 to 10/90, more preferably from 95/5 to 20/80, particularly preferably from 90/10 to 30/70, even more preferably from 85/15 to 35/65, and especially preferably from 80/20 to 40/60.

Examples of the alicyclic polyhydric alcohol include 1,4-cyclohexanediol, 1,4-cyclohexanedimethanol, tricyclodecanediol, tricyclodecane dimethanol, and spiroglycol.

Examples of the aromatic polyhydric alcohol include paraxylene glycol, metaxylene glycol, orthoxylene glycol, 1,4-phenylene glycol, ethylene oxide adducts of 1,4-phenylene glycol, bisphenol analogs and hydrogenated products thereof, such as bisphenol A, bisphenol B, bisphenol E, bisphenol F, bisphenol AP, bisphenol BP, bisphenol P, bisphenol PH, bisphenol S, bisphenol Z, 4,4'-dihydroxybenzophenone, and bisphenolfluorene, and glycol analogs, such as ethylene oxide adducts or propylene oxide adducts obtained by adding one to several moles of ethylene oxide or propylene oxide to a hydroxyl group of a bisphenol analog.

The polyhydric alcohol (β) to be used may be, for example, polyester diol, polyether diol, polycaprolactone diol, polycarbonate diol, hydrogenated polybutadiene diol, or hydrogenated polyisoprene diol, for easily obtaining a polymer having a target molecular weight.

Examples of the polyester diol include structural units derived from a polyester diol obtained by dehydration reaction of a diol component and a dicarboxylic acid component or its derivative individually or in a mixture state, wherein examples of the diol component include ethylene glycol, diethylene glycol, 1,4-butanediol, neopentyl glycol, 3-methyl-1,5-pentanediol, 2-butyl-2-ethyl-1,3-propanediol, 2,4-diethyl-1,5-pentanediol, 1,8-octanediol, 1,9-nonanediol, 2-methyl-1,8-octanediol, 1,10-decanediol, and octadecanediol, and examples of the dicarboxylic acid component or its derivative include succinic acid, methylsuccinic acid, adipic acid, pimelic acid, azelaic acid, sebacic acid, 1,12-dodecanedioic acid, 1,14-tetradecanedioic acid, terephthalic acid, isophthalic acid, and an acid anhydride or lower alkyl ester thereof.

Examples of commercially available products of the polyester diol include polyester diols of 3-methyl-1,5-pentanediol and adipic acid available under trade names of "Kuraray Polyol P-510", "Kuraray Polyol P-1010", "Kuraray Polyol P-2010", "Kuraray Polyol P-3010", and "Kuraray Polyol P-5010" [all are available from Kuraray Co., Ltd.].

Examples of the polyether diol include structural units derived from polyethylene glycol, polypropylene glycol, or polytetramethylene glycol obtained by ring-opening polymerization of ethylene oxide, propylene oxide, tetrahydrofuran, or the like, and copolyether glycol or the like obtained by copolymerization of these.

Examples of commercially available products of the polyether diol include polyether diols obtained by adding propylene oxide to propylene glycol available under trade names of "Adeka Polyether P-400", "Adeka Polyether P-1000", "Adeka Polyether P-2000", and "Adeka Polyether P-3000" [all are available from ADEKA Corporation].

Examples of the polycaprolactone diol include structural units derived from a caprolactone-based polyester diol obtained by ring-opening polymerization of a cyclic ester monomer, such as ε-caprolactone or δ-valerolactone.

Examples of commercially available products of the polycaprolactone diol include those available under trade names of "PLACCEL L205AL", "PLACCEL L212AL", "PLACCEL L220AL", "PLACCEL L220PL", and "PLACCEL L230AL" [all are available from Daicel Corporation].

Examples of the polycarbonate diol include structural units derived from a polycarbonate diol or the like obtained by dealcoholization reaction or the like of a dialkyl carbonate such as diethyl carbonate or dimethyl carbonate and a polyhydric alcohol such as ethylene glycol, 1,3-propylene glycol, 1,4-butanediol, 1,6-hexanediol, 3-methyl-1,5-pentanediol, or 1,9-nonanediol, or a carbonate diol such as propylene carbonate diol, hexamethylene carbonate diol, or 3-methylpentene carbonate diol.

Examples of commercially available products of the polycarbonate diol include those available under trade names of "PLACCEL CD205", "PLACCEL CD210", "PLACCEL CD220", "PLACCEL CD205PL", "PLACCEL CD210PL", and "PLACCEL CD220PL" [all are available from Daicel Corporation].

Examples of the hydrogenated polybutadiene polyol include structural units derived from a hydrogenated polybutadiene polyol or the like in which double bonds of 1,2-polybutadiene polyol, 1,4-polybutadiene polyol, or the like are saturated with hydrogen, halogen, or the like.

Examples of commercially available products of the hydrogenated polybutadiene polyol include those available under trade names of "GI-1000", "GI-2000", and "GI-3000" [all are available from Nippon Soda Co., Ltd.].

Examples of the hydrogenated polyisoprene polyol include structural units of hydrogenated polyisoprene polyol or the like in which double bonds of polyisoprene polyol are saturated with hydrogen, halogen, or the like.

Examples of commercially available products of the hydrogenated polyisoprene polyol include one available under a trade name of "EPOL" [available from Idemitsu Kosan Co., Ltd.].

Tri- or Higher Functional Polyvalent Carboxylic Acid and Tri- or Higher Functional Polyhydric Alcohol

The polyester (A) preferably has a structural unit derived from a tri- or higher functional polyvalent carboxylic acid and/or a tri- or higher functional polyhydric alcohol described above in "Polyvalent Carboxylic Acid ($\alpha$)" and "Polyhydric Alcohol ($\beta$)" for the purpose of improving the cohesive force by introducing a branched skeleton and increasing the curability by an active energy ray. In particular, in the case of forming a crosslinked structure by an active energy ray, when the polyester (A) has a branched skeleton, the polyester (A) has an increased number of crosslinking points. This makes it possible to efficiently obtain a pressure-sensitive adhesive having high cohesive force with a small active energy ray irradiation dose.

Examples of the tri- or higher functional polyvalent carboxylic acid include compounds, such as trimellitic acid, trimesic acid, ethylene glycol bis(anhydrotrimellitate), glycerol tris(anhydrotrimellitate), trimellitic anhydride, pyromellitic dianhydride, oxydiphthalic dianhydride, 3,3',4,4'-diphenylsulfonetetracarboxylic dianhydride, 3,3',4,4'-benzophenonetetracarboxylic anhydride, and 4,4'-(hexafluoroisopropylidene)diphthalic dianhydride, and 2,2'-bis[(dicarboxyphenoxy) phenyl]propane dianhydride.

Examples of the tri- or higher functional polyhydric alcohol include glycerin, trimethylolethane, trimethylolpropane, and pentaerythritol.

One type or two or more types of these tri- or higher functional polyvalent carboxylic acids or tri- or higher functional polyhydric alcohols can be used.

When the polyester (A) contains a structural unit derived from a tri- or higher functional polyvalent carboxylic acid and/or a tri- or higher functional polyhydric alcohol as a branched skeleton, the content of the structural unit derived from the tri- or higher functional polyvalent carboxylic acid per structural unit derived from the polyvalent carboxylic acid ($\alpha$) and the content of the structural unit derived from the tri- or higher functional polyhydric alcohol per structural unit derived from the polyhydric alcohol ($\beta$) are each preferably from 0.1 to 5 mol%, more preferably from 0.3 to 4 mol%, even more preferably from 0.5 to 3 mol%, and particularly preferably from 1 to 2.5 mol%. When both or either of these contents is too high, mechanical properties, such as elongation at break of a coating film formed by application of the pressure-sensitive adhesive, tend to decrease, resulting in a decrease in pressure-sensitive adhesive force, and gelation tends to occur during polymerization.

When the polyester (A) contains a structural unit derived from a tri- or higher functional polyvalent carboxylic acid and/or a tri- or higher functional polyhydric alcohol as a branched skeleton, the content of the structural units derived from the tri- or higher functional polyvalent carboxylic acid and/or the structural unit derived from the tri- or higher functional polyhydric alcohol is preferably from 0.1 to 3 mass%, more preferably from 0.2 to 4 mass%, particularly preferably from 0.3 to 3 mass%, even more preferably from 0.4 to 2 mass%, and from 0.5 to 1.5 mass% per 100 mass% of all structural units of the polyester (A). When the content of the structural unit derived from the tri- or higher functional polyvalent carboxylic acid and/or the content of the structural unit derived from the tri- or higher functional polyhydric alcohol is too high, mechanical properties, such as elongation at break of a coating film formed by application of the pressure-sensitive adhesive, tend to decrease, resulting in a decreased in pressure-sensitive adhesive force, and gelation tends to occur during polymerization.

Compound (B) Having Photoreactive Group

The polyester (A1) contained in the present composition 1 contains, besides the structural unit derived from the polyvalent carboxylic acid ($\alpha$) and the structural unit derived from the polyhydric alcohol ($\beta$), a structural unit derived from a compound (B) having a photoreactive group so that the polyester (A1) itself can be crosslinked by an active energy ray.

Examples of the compound (B) having a photoreactive group include a compound (b1) having a hydrogen

abstraction type photoreactive group and a compound (b2) having a cleavage type photoreactive group. These may be used alone or in combination of two or more types. Among these, a compound (b1) having a hydrogen abstraction type photoreactive group is preferable from the viewpoint of excellent active energy ray curability. However, the photoreactive group excludes an ethylenically unsaturated group such as a vinyl group, an allyl group, or an acryloyl group.

The compound (B) having a photoreactive group used in the polyester (A1) containing a photoreactive group more preferably has one or more carboxy groups and/or hydroxy groups, particularly preferably has two or more carboxy groups and/or hydroxy groups, and especially preferably has two or more carboxy groups. Having two or more carboxy groups in the molecule is preferable in that the photoreactive group is incorporated into the main chain of the polyester via an ester bond, resulting in excellent active energy ray curability, thermal stability, and pressure-sensitive adhesive force. That is, the compound (B) having a photoreactive group is preferably the polyvalent carboxylic acid ($\alpha$).

Compound (b1) Having Hydrogen Abstraction Type Photoreactive Group

The compound (b1) having a hydrogen abstraction type photoreactive group is not particularly limited as long as it generates a radical by abstraction of hydrogen from a hydrogen donor by irradiation with an active energy ray, and a compound known in the art can be used.

Examples of the compound (b1) having a hydrogen abstraction type photoreactive group include a benzophenone analog (b1-1), a thioxanthone analog (b1-2), an anthraquinone analog (b1-3), a ketocoumarin analog, and a camphorquinone analog. A single type or two or more types of these may be contained. Among these, the benzophenone analog (b1-1) is preferable from the viewpoint of excellent active energy ray curability.

When the polyester (A1) contains a structural moiety derived from a compound (b1) having a hydrogen abstraction type photoreactive group, the polyester (A1) itself can undergo a hydrogen abstraction reaction by an active energy ray without requiring an unsaturated group or a crosslinker that can react by an active energy ray and/or heat. This makes it possible to obtain a pressure-sensitive adhesive having not only excellent pressure-sensitive adhesive force and holding force, but also excellent thermal stability and hot melt coating suitability. The hydrogen abstraction type photoreactive group contained in the polyester (A1) is also preferable from the viewpoint that it can repeatedly function as an active species by being irradiated with light again even after being used once in a photocuring reaction.

The benzophenone analog (b1-1) is not particularly limited, but examples thereof include a compound represented by General Formula (1) described below.

[Chem. 1]

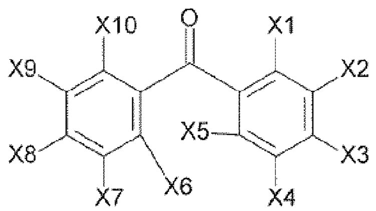

(1)

(In Formula (1), X1 to X10 may be the same or different and each represent any one selected from the group consisting of a hydrogen group, an alkyl group, an alkenyl group, an aryl group, an aryloxy group, an alkoxy group, an alkoxycarbonyl group, a heterocyclic group, an acyl group, a carboxy group, a hydroxy group, an amide group, a cyano group, a sulfone group, an acryloyloxy group, a methacryloyloxy group, a halogen group, an alkylamino group, and the like.)

The compound represented by General Formula (1) has at least one or more carboxy groups or hydroxy groups in the molecule.

Specific examples of the compound include monofunctional hydroxybenzophenones having one hydroxy group in the molecule, such as 3-hydroxybenzophenone, 2-hydroxy-4-n-octyloxybenzophenone, 2-hydroxy-4-methoxybenzophenone, 5-bromo-2-hydroxybenzophenone, 2-hydroxy-5-methylbenzophenone, and 4-chloro-4'-hydroxybenzophenone; monofunctional carboxybenzophenone analogs having one carboxy group in the molecule, such as benzophenone-2-carboxylic acid, benzophenone-4-carboxylic acid, and 3',4'-dimethylbenzophenone-2-carboxylic acid; polyvalent hydroxybenzophenone analogs having two or more hydroxy groups in the molecule, such as 2,3,4-trihydroxybenzophenone, 2,2'-dihydroxybenzophenone, 4,4'-dihydroxybenzophenone, 2,2'-dihydroxy-4-methoxybenzophenone, 2,2',4,4'-tetrahydroxybenzophenone, and 2,4,4'-trihydroxybenzophenone; and polyvalent carboxybenzophenone analogs having two or more carboxy groups in the molecule, such as benzophenone-2,4'-dicarboxylic acid, benzophenone-4,4'-dicarboxylic acid, and 3,3',4,4'-benzophenonetetracarboxylic dianhydride. Among these, from the viewpoints of excellent

esterification reactivity and excellent active energy ray curability by being incorporated into the main chain of the polyester (A), a polyvalent hydroxybenzophenone analog and a polyvalent carboxybenzophenone analog are preferable, a polyvalent carboxybenzophenone is more preferable, and 3,3',4,4'-benzophenonetetracarboxylic dianhydride is particularly preferable.

The thioxanthone analog (b1-2) is not particularly limited, but examples thereof include a compound represented by General Formula (2) described below.

[Chem. 2]

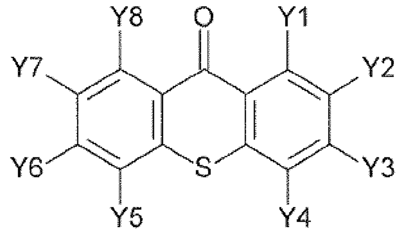

(2)

(In Formula (2), Y1 to Y8 may be the same or different and each represent any one selected from the group consisting of a hydrogen group, an alkyl group, an alkenyl group, an aryl group, an aryloxy group, an alkoxy group, an alkoxycarbonyl group, a heterocyclic group, an acyl group, a carboxy group, a hydroxy group, an amide group, a cyano group, a sulfone group, an acryloyloxy group, a methacryloyloxy group, a halogen group, an alkylamino group, and the like.)

The compound represented by General Formula (2) has at least one or more carboxy groups or hydroxy groups in the molecule.

Specific examples of the compound include thioxanthone-2,3-dicarboxylic acid, thioxanthone-2,7-dicarboxylic acid, thioxanthone-2,6-dicarboxylic acid, and 2,2',3,3'-thioxanthonetetracarboxylic dianhydride.

The anthraquinone analog (b1-3) is not particularly limited, but examples thereof include a compound represented by General Formula (3) described below.

[Chem. 3]

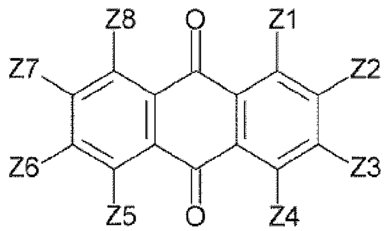

(3)

(In Formula (3), Z1 to Z8 may be the same or different and each represent any one selected from the group consisting of a hydrogen group, an alkyl group, an alkenyl group, an aryl group, an aryloxy group, an alkoxy group, an alkoxycarbonyl group, a heterocyclic group, an acyl group, a carboxy group, a hydroxy group, an amide group, a cyano group, a sulfone group, an acryloyloxy group, a methacryloyloxy group, a halogen group, an alkylamino group, and the like.)

The compound represented by General Formula (3) has at least one or more carboxy groups or hydroxy groups in the molecule.

Specific examples of the compound include anthraquinone-2,3-dicarboxylic acid, anthraquinone-2,7-dicarboxylic acid, anthraquinone-2,6-dicarboxylic acid, and 2,2',3,3'-anthraquinonetetracarboxylic dianhydride.

Compound (b2) Having Cleavage Type Photoreactive Group

The compound (b2) having a cleavage type photoreactive group is not particularly limited as long as it is photocleaved by irradiation with an active energy ray and generates a radical, and a compound known in the art can be used.

Examples of the compound (b2) having a cleavage type photoreactive group include benzoin analogs, benzyl ketal analogs, hydroxyacetophenone analogs, aminoacetophenone analogs, and acylphosphine oxide analogs. A single type or two or more types of these may be contained.

When the polyester (A1) contains a structural moiety derived from the compound (b2) having a cleavage type

photoreactive group, the polyester (A1) itself can undergo a reaction by an active energy ray without requiring an unsaturated group or a crosslinker that can react by an active energy ray and/or heat. This makes it possible to obtain a pressure-sensitive adhesive having not only excellent pressure-sensitive adhesive force and holding force, but also excellent thermal stability and hot melt coating suitability. The cleavage type photoreactive group contained in the polyester (A1) is also preferable from the viewpoint that it can repeatedly function as an active species by being irradiated with light again even after being used once in a photocuring reaction.

The compound (B) having a photoreactive group is incorporated into the structure of the polyester (A) via any functional group of the polyester (A) and a chemical bond, but a structural unit derived from the compound (B) having a photoreactive group is preferably incorporated into the main chain of the polyester (A1) via an ester bond.

As a method for incorporating the compound (B) having a photoreactive group into the polyester (A), a chemical reaction known in the art can be used. Among others, the compound (B) is preferably esterified with a functional group derived from the polyvalent carboxylic acid ($\alpha$) and/or the polyhydric alcohol ($\beta$) of the polyester (A) (however, excluding an epoxy ester bond formed by a reaction of an epoxy group with a carboxy group).

In the case where the compound (B) having a photoreactive group is the polyvalent carboxylic acid ($\alpha$), the polyvalent carboxylic acid ($\alpha$) containing the compound (B) having a photoreactive group is esterified with the polyhydric alcohol ($\beta$).

The content of the structural unit derived from the compound (B) having a photoreactive group is preferably from 0.001 to 30 mol%, more preferably from 0.01 to 15 mol%, particularly preferably from 0.05 to 10 mol%, even more preferably from 0.1 to 5 mol%, especially preferably from 0.2 to 3 mol%, more preferably from 0.3 to 1.5 mol%, more preferably from 0.4 to 1.25 mol%, and more preferably from 0.5 to 1.0 mol% per 100 mol% of all structural units of the polyester (A1). When the content of the structural unit derived from the compound (B) having a photoreactive group is too low, the active energy ray curability, pressure-sensitive adhesive force, and holding force tend to be insufficient. When the content is too high, the crosslink density of the polyester (A1) tends to increase, resulting in insufficient pressure-sensitive adhesive force and tackiness, and the melt viscosity tends to increase, resulting in insufficient coating suitability.

The content of the structural unit derived from the compound (B) having a photoreactive group is preferably from 0.001 to 30 mass%, more preferably from 0.01 to 15 mass%, particularly preferably from 0.1 to 10 mass%, even more preferably from 0.2 to 5 mass%, especially preferably from 0.3 to 3 mass%, most preferably from 0.4 to 1.5 mass%, and more preferably from 0.5 to 1.0 mass% per 100 mass% of all structural units of the polyester (A1). When the content of the structural unit derived from the compound (B) having a photoreactive group is too low, the active energy ray curability, pressure-sensitive adhesive force, and holding force tend to be insufficient. When the content is too high, the crosslink density of the polyester (A1) tends to increase, resulting in insufficient pressure-sensitive adhesive force and tackiness, and the melt viscosity tends to increase, resulting in insufficient coating suitability.

Cyclic Ester

The polyester (A) may contain, besides the structural unit derived from the polyvalent carboxylic acid ($\alpha$), the structural unit derived from the polyhydric alcohol ($\beta$), and the structural unit derived from the compound (B) having a photoreactive group, a structural unit derived from a cyclic ester for adjusting the melt viscosity and the glass transition temperature and for imparting biodegradability, as long as the effects of the present disclosure are not impaired.

Examples of the cyclic ester include aliphatic lactones, such as lactide, $\beta$-propiolactone, $\beta$-butyrolactone, $\gamma$-butyrolactone, $\gamma$-hexanolactone, $\gamma$-octanolactone, $\delta$-valerolactone, $\delta$-hexanolactone, $\delta$-octanolactone, $\varepsilon$-caprolactone, $\delta$-dodecanolactone, $\alpha$-methyl-$\gamma$-butyrolactone, $\beta$-methyl-$\delta$-valerolactone, and glycolide. Among these, $\varepsilon$-caprolactone is preferable from the viewpoint of excellent pressure-sensitive adhesive force and biodegradability. One type or two or more types of these cyclic ester compounds can be used.

The content of the structural unit derived from the cyclic ester in the polyester (A) is preferably less than 140 mol%, more preferably less than 100 mol%, particularly preferably less than 60 mol%, even more preferably less than 30 mol%, especially preferably less than 15 mol%, and most preferably 0 mol% per 100 mol% of the structural unit of the polyvalent carboxylic acid ($\alpha$). When the content of the structural unit derived from the cyclic ester is too high, the polyester (A) tends to crystallize, resulting in a reduction in active energy curability and pressure-sensitive adhesive force, and the melt viscosity tends to increase, resulting in deterioration of the hot melt coating suitability.

The polyester (A) may contain a structural unit derived from a compound having both a carboxylic acid and a hydroxyl group in the molecule for adjusting the melt viscosity and the glass transition temperature and for imparting biodegradability, as long as the effects of the present disclosure are not impaired.

Examples of the compound having both a carboxylic acid and a hydroxyl group in the molecule include glycolic acid, lactic acid, hydroxybutyric acid, and hydroxyhexanoic acid. Among these, lactic acid or hydroxybutyric acid is particularly preferable from the viewpoint of increasing the ester bond concentration and providing excellent pressure-sensitive adhesive force and biodegradability. One type or two or more types of these compounds having a structural unit derived from a compound having both a carboxylic acid and a hydroxyl group in the molecule can be used.

The content of the structural unit derived from a compound having both a carboxylic acid and a hydroxyl group in the molecule in the polyester (A) is preferably 100 mol% or less, more preferably 80 mol% or less, particularly preferably 60 mol% or less, even more preferably 40 mol% or less, especially preferably 20 mol% or less, and most preferably 10 mol% or less per 100 mol% of the structural unit derived from the polyvalent carboxylic acid (α). When the content of the structural unit derived from the compound having both a carboxylic acid and a hydroxyl group in the molecule is too high, the polyester (A) tends to crystallize, resulting in a reduction in active energy curability and pressure-sensitive adhesive force, and the melt viscosity tends to increase, resulting in deterioration of the hot melt coating suitability.

Production of Polyester (A)

The polyester (A) can be produced by a well-known method.

For example, the polyester (A1) can be produced by subjecting a polyvalent carboxylic acid (α), a polyhydric alcohol (β), and a compound (B) having a photoreactive group to esterification reaction in the presence of a catalyst as necessary, to form a prepolymer, then polycondensing the prepolymer to form a polyester, and further introducing a hydroxyl group and/or an acid group as necessary.

The polyester (A2) can be produced by subjecting a polyvalent carboxylic acid (α) and a polyhydric alcohol (β) to esterification reaction in the presence of a catalyst as necessary, to form a prepolymer, then polycondensing the prepolymer to form a polyester, and further introducing a hydroxyl group and/or an acid group as necessary.

The temperature of the esterification reaction is usually from 180 to 280°C, and the reaction time is usually from 60 minutes to 8 hours.

The temperature of the polycondensation is usually from 220 to 280°C, and the reaction time is usually from 20 minutes to 4 hours. The polycondensation is preferably carried out under reduced pressure.

Examples of the method for introducing an acid group into the polyester include a method for introducing a carboxy group into the polyester by an acid addition method, a depolymerization method, or the like after the esterification reaction or after polycondensation under reduced pressure.

Among these, in the case of introducing a carboxy group into the end of the main chain of the polyester, a depolymerization method is particularly preferable from the viewpoint that a carboxy group can be efficiently introduced.

In the case of introducing a carboxy group into a side chain of the polyester, an acid addition method is preferable.

When a carboxy group is introduced into the end of the main chain of the polyester by the depolymerization method, in the case of the polyester (A1), for example, a polyvalent carboxylic acid (α), a polyhydric alcohol (β), and a compound (B) having a photoreactive group are subjected to esterification reaction in the presence of a catalyst as necessary, to form a prepolymer, and then the prepolymer is polycondensed and further depolymerized.

In the case of the polyester (A2), for example, a polyvalent carboxylic acid (α) and a polyhydric alcohol (β) are subjected to esterification reaction in the presence of a catalyst as necessary, to form a prepolymer, and then the prepolymer is polycondensed and further depolymerized.

In the depolymerization, a trivalent or higher valent polyvalent carboxylic acid having zero or one acid anhydride group is preferably used from the viewpoint of pressure-sensitive adhesive force. Examples of the trivalent or higher valent polyvalent carboxylic acid having zero or one acid anhydride group include compounds, such as trimellitic acid, trimellitic anhydride, hydrogenated trimellitic anhydride, and trimesic acid. From the viewpoint that a decrease in molecular weight can be suppressed, a trivalent or higher valent polyvalent carboxylic acid having one acid anhydride group is preferable. Examples thereof include trimellitic anhydride and hydrogenated trimellitic anhydride. Trimellitic anhydride is particularly preferable.

The temperature of the depolymerization is usually from 200 to 260°C, and the reaction time is usually from 10 minutes to 3 hours.

In the case of producing the polyester (A) by the depolymerization method, when the content of the structural unit derived from the trivalent or higher valent polyvalent carboxylic acid having zero or one acid anhydride group is more than 20 mol% per 100 mol% of the structural unit derived from the polyvalent carboxylic acid (α), the molecular weight of the resin tends to greatly decrease.

Thus, the content of the structural unit derived from the trivalent or higher valent polyvalent carboxylic acid having zero or one acid anhydride group is preferably 20 mol% or less, more preferably from 1 to 15 mol%, particularly preferably from 2 to 10 mol%, and even more preferably from 3 to 8 mol% per 100 mol% of the structural unit derived from the polyvalent carboxylic acid (α).

In the case of introducing a carboxy group into a side chain of the polyester by the acid addition method, for example, a polyvalent carboxylic acid (α) excluding a polyvalent carboxylic anhydride, a polyhydric alcohol (β), and a compound (B) having a photoreactive group are subjected to esterification reaction to form a prepolymer, and then the resulting hydroxyl group-containing prepolymer is reacted with a polyvalent carboxylic anhydride for acid addition. In the acid addition method, the use of a monocarboxylic acid, a dicarboxylic acid, or a polyfunctional carboxylic acid compound may reduce the molecular weight by transesterification. Thus, a compound having at least one carboxylic anhydride is

preferably used.

Examples of the depolymerization and acid addition methods include a method of directly adding an acid in a bulk state and a method of adding an acid to a solution prepared from the polyester.

The reaction in a bulk state proceeds fast, but a large amount of addition may cause gelation, and the reaction is carried out at a high temperature. Thus, a care is required, for example, oxygen gas is blocked to prevent oxidation.

Meanwhile, in the case of addition in a solution state, the reaction proceeds slowly, but a large amount of carboxy groups can be stably introduced.

Examples of the polyvalent carboxylic anhydride include succinic anhydride, maleic anhydride, orthophthalic anhydride, 2,5-norbornenedicarboxylic anhydride, tetrahydrophthalic anhydride, trimellitic anhydride, pyromellitic dianhydride, oxydiphthalic dianhydride, 3,3',4,4'-benzophenonetetracarboxylic dianhydride, 3,3',4,4'-Biphenyltetracarboxylic dianhydride, 3,3',4,4'-Biphenylsulfonetetracarboxylic dianhydride, and 4,4'-(hexafluoroisopropylidene)diphthalic dianhydride, and 2,2'-bis[(dicarboxyphenoxy)phenyl]propane dianhydride.

In the case of producing the polyester (A) by the acid addition method, when the acid addition is performed in an amount of 15 mol% or more per 100 mol% of the structural unit derived from the polyvalent carboxylic acid ($\alpha$), gelation may occur. Thus, the acid addition is preferably performed in an amount of less than 15 mol%.

Composition Proportion of Polyester (A)

The proportion (composition proportion) of the structural moiety derived from each component of the polyester (A) can be determined by a known method using NMR, for example, $^{1}$H-NMR spectrometry (proton nuclear magnetic resonance spectrometry) at a resonance frequency of 400 MHz or $^{13}$C-NMR spectrometry (carbon nuclear magnetic resonance spectrometry).

Glass Transition Temperature of Polyester (A)

The glass transition temperature of the polyester (A) is preferably from -80 to 30°C, more preferably from -75 to 10°C, even more preferably from -70 to -10°C, particularly preferably from -65 to -20°C, even more preferably from -60 to -30°C, especially preferably from -55 to -35°C, and most preferably from -50 to -40°C. When the glass transition temperature is too high, the tackiness and pressure-sensitive adhesive force tend to be insufficient, and the melt viscosity tends to increase, resulting in deterioration of the hot melt coating suitability. When the glass transition temperature is too low, the holding force and heat resistance tend to be insufficient.

The method of measuring the glass transition temperature is as follows.

The glass transition temperature can be determined by measurement using a differential scanning calorimeter. The measurement conditions include a measurement temperature range of -90 to 100°C and a temperature increase rate of 10°C/min.

Acid Value of Polyester (A)

The acid value of the polyester (A) is preferably 30 mg KOH/g or less, more preferably 10 mg KOH/g or less, particularly preferably 5 mg KOH/g or less, even more preferably 3 mg KOH/g or less, especially preferably 1 mg KOH/g or less, and most preferably 0.5 mg KOH/g or less. When the acid value is too high, the moist-heat resistance tends to be insufficient, and the heat resistance tends to decrease, whereby thermal decomposition proceeds easily.

The definition of the acid value and the measurement method thereof are as follows.

The acid value (mg KOH/g) can be determined by dissolving 1 g of the polyester (A) in 30 g of a mixed solvent of toluene/methanol (e.g., toluene/methanol = 7/3 at a volume ratio), and performing neutralization titration in accordance with JIS K 0070.

In the present disclosure, the acid value of the polyester (A) is attributed to the content of the carboxy group in the resin.

Hydroxyl Value of Polyester (A)

The hydroxyl value of the polyester (A) is preferably 50 mg KOH/g or less, particularly preferably from 1 to 30 mg KOH/g, even preferably from 2 to 20 mg KOH/g, more preferably from 3 to 15 mg KOH/g, especially preferably from 4 to 10 mg KOH/g, and most preferably from 5 to 8 mg KOH/g. When the hydroxyl value is too high, the active energy ray curability tends to decrease, and the cohesive force and holding force tend to be insufficient. When the hydroxyl value is too low, the pressure-sensitive adhesive force and adherence tend to be insufficient, and the compatibility with a tackifier resin tends to be poor.

The hydroxyl value of the polyester (A) is determined by neutralization titration in accordance with JIS K 0070.

Isocyanate Concentration of Polyester (A)

The isocyanate concentration of the polyester (A) is preferably 5% or less, more preferably 3% or less, even more preferably 1% or less, particularly preferably 0.5% or less, especially preferably 0.3% or less, and most preferably 0.1% or less. The lower limit is 0%, and the polyester (A) preferably contains no isocyanate group. When the isocyanate concentration is too high, the reaction tends to proceed due to the heat load during the production of the polyester (A) or during hot melt coating, resulting in poor pot life and coating film appearance and a reduction in pressure-sensitive adhesive force.

Oxirane Oxygen Concentration of Polyester (A)

The oxirane oxygen concentration of the polyester (A) is preferably 5% or less, more preferably 3% or less, even more preferably 1% or less, particularly preferably 0.5% or less, especially preferably 0.3% or less, and most preferably 0.1% or less. The lower limit is 0%, and the polyester (A) preferably contains no oxirane oxygen (epoxy group). When the oxirane oxygen concentration is too high, the reaction tends to proceed due to the heat load during the production of the polyester (A) or during hot melt coating, resulting in poor pot life and coating film appearance and a reduction in pressure-sensitive adhesive force.
The oxirane oxygen concentration of the polyester (A) can be determined by titration using an acetic acid solution of hydrogen bromide in accordance with ASTM-1652.

Ester Bond Concentration of Polyester (A)

The ester bond concentration of the polyester (A) is preferably from 2 to 14 mmol/g, more preferably from 3 to 13 mmol/g, even more preferably from 4 to 12 mmol/g, particularly preferably from 5 to 11 mmol/g, especially preferably from 5.5 to 10 mmol/g, and most preferably from 6 to 9 mmol/g. When the ester bond concentration is too high, the melt viscosity tends to increase, resulting in insufficient coating suitability. When the ester bond concentration is too low, the heat resistance, substrate adherence, and pressure-sensitive adhesive force tend to be insufficient.
The definition of the ester bond concentration and the measurement method thereof are as follows.
The ester bond concentration (mmol/g) is the number of moles of ester bonds per gram of the polyester (A) and is determined, for example, by a calculated value from the charged amount. In the calculation method, the value is obtained by dividing the number of moles of smaller one of the charged amounts of a polyvalent carboxylic acid (α) and a polyhydric alcohol (β) by the total mass of the polyester (A). An example of the calculation formula is described below.
When the charged amounts of the polyvalent carboxylic acid (α) and the polyhydric alcohol (β) are the same molar amount, either of the calculation formulae described below may be used.
In the case of using a monomer having both a carboxy group and a hydroxyl group or in the case of preparing the polyester from caprolactone or the like, the calculation method is appropriately changed.

Case where Amount of Polyvalent Carboxylic Acid (α) is Less than That of Polyhydric Alcohol (β)

$$\text{Ester group concentration (mmol/g)} = [(P1/p1 \times m1 + P2/p2 \times m2 + P3/p3 \times m3...)/Z] \times 1000$$

- P: Charged amount (g) of polyvalent carboxylic acid (α)
- p: Molecular weight of polyvalent carboxylic acid (α)
- m: The number of carboxy groups per molecule of polyvalent carboxylic acid (α)
- Z: Mass (g) of finished product

Case where Amount of Polyhydric Alcohol (β) is Less than That of Polyvalent Carboxylic Acid (α)

$$\text{Ester group concentration (mmol/g)} = [(Q1/q1 \times n1 + Q2/q2 \times n2 + Q3/q3 \times n3... )/Z] \times 1000$$

- Q: Charged amount (g) of polyhydric alcohol (β)

q: Molecular weight of polyhydric alcohol (β)
n: The number of hydroxyl groups per molecule of polyhydric alcohol (β)
Z: Mass (g) of finished product

The ester bond concentration can also be measured by a known method using NMR or the like, for example, $^1$H-NMR spectrometry (proton nuclear magnetic resonance spectrometry) at a resonance frequency of 400 MHz or $^{13}$C-NMR spectrometry (carbon nuclear magnetic resonance spectrometry).

Unsaturated Group Concentration of Polyester (A)

The unsaturated group concentration of the polyester (A) is preferably less than 1.5 mmol/g, more preferably 1.0 mmol/g or less, particularly preferably 0.5 mmol/g or less, even more preferably 0.3 mmol/g or less, especially preferably 0.1 mmol/g or less, and most preferably 0.01 mmol/g or less, per gram of the polyester (A). The lower limit is 0 mmol/g. When the unsaturated group concentration of the polyester (A) is too high, the unsaturated group tends to react due to the heat load during the production of the polyester (A) or during hot melt coating, resulting in poor pot life and coating film appearance and a reduction in pressure-sensitive adhesive force. The concentration of the unsaturated group contained in the polyester (A) can be determined from a spectrum obtained by $^1$H-NMR spectrometry or $^{13}$C-NMR spectrometry.

Epoxy Group Concentration of Polyester (A)

The epoxy group concentration of the polyester (A) is preferably 5 mmol/g or less, more preferably 3 mmol/g or less, particularly preferably 2 mmol/g or less, even more preferably 1 mmol/g or less, especially preferably 0.5 mmol/g or less, and most preferably 0.1 mmol/g or less, per gram of the polyester (A). The lower limit is 0 mmol/g. When the epoxy group concentration of the polyester (A) is too high, the epoxy group tends to react due to the heat load during the production of the polyester (A) or during hot melt coating, resulting in poor pot life and coating film appearance and a reduction in pressure-sensitive adhesive force.
The epoxy group concentration is determined by taking the reciprocal of the epoxy equivalent calculated in accordance with JIS K 7236.

Peak-Top Molecular Weight (Mp), Number Average Molecular Weight (Mn), and Weight Average Molecular Weight (Mw) of Polyester (A)

The peak-top molecular weight (Mp) of the polyester (A) is preferably from 5000 to 150000, more preferably from 10000 to 120000, particularly preferably from 20000 to 100000, even more preferably from 30000 to 90000, and especially preferably from 40000 to 80000.
When the peak-top molecular weight (Mp) is too low, the active energy ray curability tends to decrease, and the cohesive force tends to be insufficient, resulting in insufficient heat resistance and moisture-heat durability. When the peak-top molecular weight (Mp) is too high, the adherence and pressure-sensitive adhesive force tend to be insufficient, and the melt viscosity tends to increase, resulting in insufficient coating suitability.
The number average molecular weight (Mn) of the polyester (A) is preferably from 1000 to 150000, more preferably from 2500 to 120000, particularly preferably from 5000 to 100000, even more preferably from 10000 to 80000, and especially preferably from 20000 to 60000.
When the number average molecular weight (Mn) is too low, the active energy ray curability tends to decrease, and the cohesive force tends to be insufficient, resulting in insufficient heat resistance and moisture-heat durability. When the number average molecular weight (Mn) is too high, the adherence and pressure-sensitive adhesive force tend to be insufficient, and the melt viscosity tends to increase, resulting in insufficient coating suitability.
The weight average molecular weight (Mw) of the polyester (A) is preferably from 5000 to 500000, more preferably from 10000 to 300000, particularly preferably from 20000 to 200000, even more preferably from 30000 to 150000, especially preferably from 50000 to 130000, and most preferably from 70000 to 110000.
When the weight average molecular weight (Mw) is too low, the active energy ray curability tends to decrease, and the cohesive force tends to be insufficient, resulting in insufficient heat resistance and moisture-heat durability. When the weight average molecular weight (Mw) is too high, the substrate adherence and pressure-sensitive adhesive force tend to be insufficient, and the melt viscosity tends to increase, resulting in insufficient coating suitability.
The method of measuring the peak-top molecular weight (Mp), the number average molecular weight (Mn), and the weight average molecular weight (Mw) is as follows.
The peak-top molecular weight (Mp), the number average molecular weight (Mn), and the weight average molecular weight (Mw) are measured with a high-performance liquid chromatograph ("HLC-8320GPC" available from Tosoh Corporation) with two columns (TSKgel SuperMultipore HZ-M (exclusion limit molecular weight: $2 \times 10^6$, theoretical

plate number: 16000 plates/column, filler material: styrenedivinylbenzene copolymer, filler particle size: 4 μm)) in series and can be determined in terms of the molecular weight of standard polystyrene.

The polydispersity of the polyester (A) is preferably 0.5 or more, more preferably from 1 to 30, particularly preferably from 1.5 to 20, even more preferably from 2 to 15, especially preferably from 2.5 to 10, and most preferably from 3 to 8. When the polydispersity is too low, the active energy ray curability tends to decrease, and the cohesive force tends to be insufficient, resulting in insufficient heat resistance and moisture-heat durability. When the polydispersity is too high, the adherence and pressure-sensitive adhesive force tend to be insufficient, and the melt viscosity tends to increase, resulting in insufficient coating suitability. The polydispersity is calculated by the following calculation formula.

Polydispersity = weight average molecular weight (Mw)/number average molecular weight (Mn)

The melt viscosity (130°C) of the polyester (A) is preferably 500 Pa·s or less, more preferably from 1 to 400 Pa·s, even more preferably from 3 to 300 Pa·s, particularly preferably from 5 to 200 Pa·s, especially preferably from 10 to 150 Pa·s, and most preferably 15 to 100 Pa·s. When the melt viscosity is too low, the heat resistance, holding force, pressure-sensitive adhesive force, and moisture-heat durability tend to be insufficient. When the melt viscosity is too high, the coating film tends to have a streaked appearance, resulting in insufficient coating suitability.

In the case where the polyester (A) is the polyester (A1) containing a photoreactive group, its melt viscosity (160°C) is preferably 200 Pa·s or less, more preferably from 1 to 150 Pa·s, even more preferably from 2 to 100 Pa·s, particularly preferably from 3 to 80 Pa·s, especially preferably from 4 to 60 Pa·s, and most preferably from 5 to 40 Pa·s. When the melt viscosity is too low, the heat resistance, holding force, pressure-sensitive adhesive force, and moisture-heat durability tend to be insufficient. When the melt viscosity is too high, the coating film tends to have a streaked appearance, resulting in insufficient coating suitability.

The method of measuring the melt viscosity is as follows.

The melt viscosity at the time when the polyester is extruded from a nozzle is measured by a constant temperature method using a flow tester "CFT-500EX" (available from Shimadzu Corporation) under conditions of a test temperature of 130°C or 160°C, a residence time of 3 minutes, a test force of 30 (load 3 kg), a die diameter of 1.0 mm, a die length of 10 mm, and a stroke of 20 mm.

The polyester (A) preferably has a low rate of change in melt viscosity before and after a thermal history (200°C x 3 hours, under air conditions) from the viewpoints of thermal stability and coating suitability. The rate of change in melt viscosity is preferably from 20 to 500%, more preferably from 30 to 400%, even more preferably from 40 to 300%, particularly preferably from 50 to 250%, especially preferably from 60 to 200%, and most preferably from 70 to 150%. When the rate of change in melt viscosity before and after the thermal history is out of the above range, the pressure-sensitive adhesive tends to gel or decompose, resulting in insufficient coating suitability, and the pressure-sensitive adhesive force and adherence tend to be insufficient.

The polyester (A) is preferably an amorphous polyester from the viewpoint of active energy ray curability, tackiness, optical properties, and the like. When the polyester (A) is crystalline, the active energy ray curability, tackiness, molding stability, optical properties, and the like tend to be insufficient.

The amorphousness can be confirmed with a differential scanning calorimeter and refers to, for example, a property in which an endothermic peak due to crystal melting is not observed when the measurement is performed in a measurement temperature range of -90 to 400°C at a temperature increase rate of 10°C/min. The measurement temperature range and the temperature increase rate can be appropriately changed depending on the sample.

The crystal melting heat of the polyester (A) is preferably 0 J/g from the viewpoint of active energy ray curability, tackiness, optical properties, and the like. However, in the case where the polyester (A) is crystallized, the crystal melting heat is 50 J/g or less, preferably 30 J/g or less, particularly preferably 10 J/g or less, especially preferably 5 J/g or less, more preferably 3 J/g or less, and most preferably 1 J/g or less.

The polyester (A) is preferably made from a plant-derived raw material and has a biomass content to reduce the load on the global environment.

The biomass content of the polyester (A) is preferably 10% or more, more preferably 20% or more, particularly preferably 30% or more, even more preferably 40% or more, especially preferably 50% or more, and most preferably 60% or more. The upper limit is 100%. When the biomass content is too low, the reduction of the load on the global environment tends to be insufficient.

Here, the biomass content of the polyester (A) is a mass proportion of a portion where a plant-derived raw material used for producing the polyester (A) is incorporated into the resin relative to the total mass of the polyester (A). The calculation method thereof is as follows. The biomass content of the polyvalent carboxylic acid (α) or the polyhydric alcohol (β) is determined from the weighted average of the biomass content thereof. A value obtained by any of the calculation methods described below only needs to be within the above range.

Calculation Method

Biomass content (%) = [(the number of moles of carbon of plant- derived monomers calculated from a molar ratio of polyvalent carboxylic acid ($\alpha$) and polyhydric alcohol ($\beta$) in polyester (A))/(the number of moles of carbon of all constituent monomers in polyester (A))] $\times$ 100

The biomass content can also be determined by analyzing the composition proportion by NMR and calculating the number of carbons of a plant-derived monomer/the number of total carbons.

Furthermore, the biomass content can also be measured by the method described in "Tennen Hohshasei Tanso C-14 wo Mochiita Baionenryo no Yurai Hanbetsu Gijutsu (Techniques for Determining Origin of Biofuels Using Natural Radioactive Carbon C-14)", Tokyo Metropolitan Industrial Technology Research Institute Research Report, No. 4, 2009.

Compound (B) Having Photoreactive Group

The present composition 1 may contain the compound (B) having a photoreactive group described above for increasing the crosslinking efficiency of the polyester (A) by an active energy ray.

The present composition 2 contains the compound (B) having a photoreactive group. The present composition 2, which contains the compound (B) having a photoreactive group, can have excellent active energy ray curability even without containing an unsaturated group or a crosslinker.

The compound (B) having a photoreactive group, which is contained in the present composition, functions as a photopolymerization initiator.

Examples of the compound (B) having a photoreactive group, which functions as a photopolymerization initiator, include the compound (b1) having a hydrogen abstraction type photoreactive group [hydrogen abstraction type photopolymerization initiator] and the compound (b2) having a cleavage type photoreactive group [cleavage type photopolymerization initiator] described above. A single type or two or more types of these may be contained.

Among these, the compound (b1) having a hydrogen abstraction type photoreactive group [hydrogen abstraction type photopolymerization initiator] is preferable from the viewpoint of excellent active energy ray curability.

The compound (B) having a photoreactive group is preferably the compound (b1) having a hydrogen abstraction type photoreactive group and/or the compound (b2) having a cleavage type photoreactive group, and more preferably contains at least one or more of the compound (b1) having a hydrogen abstraction type photoreactive group and the compound (b2) having a cleavage type photoreactive group from the viewpoint of excellent active energy ray curability.

In the case of using the compound (B) having a photoreactive group as a photopolymerization initiator, preferably, the compound (B) having a photoreactive group is not incorporated into the structure of the polyester (A) by a chemical bond, but is independently contained in the present composition, from the viewpoint of excellent optical properties after active energy ray curing, easy control of the degree of crosslinking, and excellent stability. Thus, in the case of using the compound (B) having a photoreactive group as a photopolymerization initiator, the compound (B) preferably has no active hydrogen group, such as a carboxy group or a hydroxy group, from the viewpoint of excellent active energy ray curability.

Examples of the compound (b1) having a hydrogen abstraction type photoreactive group [hydrogen abstraction type photopolymerization initiator] include the above-described benzophenone analog (b1-1), thioxanthone analog (b1-2), anthraquinone analog (b1-3), ketocoumarin analog, and camphorquinone analog. These may be used alone or in combination of two or more types. Among these, the benzophenone analog (b1-1) is preferable from the viewpoint of excellent active energy ray curability.

The benzophenone analog (b1-1) that can be used as a photopolymerization initiator is not particularly limited, and examples thereof include benzophenone, 4-methylbenzophenone, 2,4,6-trimethylbenzophenone, methyl o-benzoylbenzoate, 3,3'-dimethyl-4-methoxybenzophenone, 4-phenylbenzophenone, 4-benzoyl-4'-methyldiphenyl sulfide, 4-morpholinobenzophenone, 4,4'-diphenoxybenzophenone, 4-hydroxybenzophenone, and 2-carboxybenzophenone. Among these, benzophenone or 4-methylbenzophenone is preferable from the viewpoint of excellent active energy ray curability.

Examples of commercially available products of the benzophenone analog (b1-1) that can be used as a photopolymerization initiator include those available under trade names of "Omnirad BP Flakes", "Omnirad 4MBZ Flakes", "Omnipol PB", "Esacure TZT", "Esacure TZM", "Omnirad 4PBZ", "Omnirad 81", "Omnirad BMF", and "Omnirad OMBB" [all are available from IGM REJINS].

The thioxanthone analog (b1-2) that can be used as a photopolymerization initiator is not particularly limited, and examples thereof include 2-chlorothioxanthone, 2,4-dimethylthioxanthone, 2,4-diethylthioxanthone, and 2,4-diisopropylthioxanthone.

The anthraquinone analog (b1-3) that can be used as a photopolymerization initiator is not particularly limited, and examples thereof include 2-methylanthraquinone, 2-ethylanthraquinone, 2-tert-butylanthraquinone, and 2-aminoanthraquinone.

Examples of the compound (b2) having a cleavage type photoreactive group [cleavage type photopolymerization initiator] that can be used as a photopolymerization initiator include 2,2-dimethoxy-1,2-diphenylethan-1-one, 1-hydroxycyclohexyl phenyl ketone, 2-hydroxy-2-methyl-1-phenyl-propan-1-one, 1-(4-(2-hydroxyethoxy)phenyl)-2-hydroxy-2-methyl-1-propan-1-one, 2-hydroxy-1-[4-{4-(2-hydroxy-2-methylpropionyl)benzyl}phenyl]-2-methyl-propan-1-one, oligo(2-hydroxy-2-methyl-1-(4-(1-methylvinyl)phenyl)propanone), methyl phenylglyoxylate, 2-benzyl-2-dimethylamino-1-(4-morpholinophenyl)butan-1-one, 2-methyl-1-[4-(methylthio)phenyl]-2-morpholinopropan-1-one, 2-(dimethylamino)-2-[(4-methylphenyl)methyl]-1-[4-(4-morpholinyl)phenyl]-1-butanone, bis(2,4,6-trimethylbenzoyl)-phenylphosphine oxide, 2,4,6-trimethylbenzoyldiphenylphosphine oxide, (2,4,6-trimethylbenzoyl)ethoxyphenylphosphine oxide, bis(2,6-dimethoxybenzoyl)2,4,4-trimethylpentylphosphine oxide, or derivatives of these.

Examples of commercially available products of the compound (b2) having a cleavage type photoreactive group that can be used as a photopolymerization initiator include those available under trade names of "Omnirad 651", "Omnirad 184", "Omnirad 1173", "Omnirad 2959", "Omnirad 127", "Omnirad 907", "Omnirad 369", and "Omnirad TPO H" [all are available from IGM REJINS].

In the case of using the compound (B) having a photoreactive group as a photopolymerization initiator, the content thereof is preferably from 0.01 to 10 parts by mass, more preferably from 0.1 to 9 parts by mass, even more preferably from 0.3 to 8 parts by mass, particularly preferably from 0.5 to 7 parts by mass, especially preferably from 1 to 6 parts by mass, and most preferably from 1.5 to 5.5 parts by mass, per 100 parts by mass of the polyester (A). When the content is too high, the cohesive force of the pressure-sensitive adhesive layer tends to increase too much after curing by an active energy ray, resulting in a reduction in pressure-sensitive adhesive force. When the content is too low, the active energy ray curability tends to decrease, resulting in insufficient pressure-sensitive adhesive force and cohesive force.

In the case of using the compound (b1) having a hydrogen abstraction type photoreactive group as a photopolymerization initiator, the content thereof is preferably from 0.01 to 10 parts by mass, more preferably from 0.1 to 9 parts by mass, even more preferably from 0.3 to 8 parts by mass, particularly preferably from 0.5 to 7 parts by mass, especially preferably from 1 to 6 parts by mass, and most preferably from 1.5 to 5.5 parts by mass, per 100 parts by mass of the polyester (A). When the content is too high, the cohesive force of the pressure-sensitive adhesive tends to increase too much after curing by an active energy ray, resulting in a reduction in pressure-sensitive adhesive force. When the content is too low, the active energy ray curability tends to decrease, resulting in insufficient pressure-sensitive adhesive force and cohesive force.

In addition, as an auxiliary for enhancing the reaction activity of the compound (B) having a photoreactive group, triethanolamine, triisopropanolamine, 4,4'-dimethylaminobenzophenone (Michler's ketone), 4,4'-diethylaminobenzophenone, 2-dimethylaminoethyl benzoate, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, or the like may be used in combination. These auxiliaries may be used alone or in combination of two or more types.

Unsaturated Group-Containing Compound (C)

The present composition may contain an unsaturated group-containing compound (C), which is a component cured by an active energy ray for increasing the cohesive force. Examples of the unsaturated group-containing compound include urethane (meth)acrylate-based compounds and ethylenically unsaturated monomers having an ethylenically unsaturated group.

The urethane (meth)acrylate-based compound is a (meth)acrylate-based compound having a urethane bond in the molecule and can be produced by reacting a hydroxyl group-containing (meth)acrylic compound with a polyvalent isocyanate compound, and further with a polyol as necessary.

Examples of the hydroxyl group-containing (meth)acrylic compound include 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, 2-(meth)acryloyloxyethyl-2-hydroxypropyl phthalate, 2-hydroxy-3-(meth)acryloyloxypropyl (meth)acrylate, caprolactone-modified 2-hydroxyethyl (meth)acrylate, pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, and ethylene oxide-modified pentaerythritol tri(meth)acrylate. Among these, a hydroxyl group-containing (meth)acrylic compound having three or more acryloyl groups is preferably used. One type of these or a combination of two or more types thereof may be used.

The polyvalent isocyanate compound is not particularly limited, and examples thereof include aromatic, aliphatic, and alicyclic polyisocyanates. Among these, examples include polyisocyanates, such as tolylene diisocyanate, diphenylmethane diisocyanate, hydrogenated diphenylmethane diisocyanate, polyphenylmethane polyisocyanate, modified

diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; trimer compounds or multimer compounds of these polyisocyanates; biuret type polyisocyanates; or reaction products of these polyisocyanates and a polyol.

The polyol is not particularly limited, and examples thereof include polyhydric alcohols, such as ethylene glycol, diethylene glycol, triethylene glycol, tetraethylene glycol, polyethylene glycol, propylene glycol, dipropylene glycol, polypropylene glycol, butylene glycol, polybutylene glycol, 1,6-hexanediol, neopentyl glycol, cyclohexanedimethanol, hydrogenated bisphenol A, polycaprolactone, trimethylolethane, trimethylolpropane, poly(trimethylolpropane), pentaerythritol, polypentaerythritol, sorbitol, mannitol, glycerin, polyglycerin, and polytetramethylene glycol; poly(ethylene oxide), poly(propylene oxide), and polyether polyols having at least one structure of block or random copolymers of ethylene oxide/propylene oxide; polyester polyols, which are condensates of the polyhydric alcohol or a polyether polyol with a polybasic acid, such as maleic anhydride, maleic acid, fumaric acid, itaconic anhydride, itaconic acid, adipic acid, or isophthalic acid; caprolactone-modified polyols, such as caprolactone-modified polytetramethylene polyol; polyolefin-based polyols; and polybutadiene-based polyols, such as hydrogenated polybutadiene polyol.

Furthermore, examples of the polyol include carboxy group-containing polyols, such as 2,2-bis(hydroxymethyl) butyric acid, tartaric acid, 2,4-dihydroxybenzoic acid, 3,5-dihydroxybenzoic acid, 2,2-bis(hydroxymethyl)propionic acid, 2,2-bis(hydroxyethyl)propionic acid, 2,2-bis(hydroxypropyl)propionic acid, dihydroxymethylacetic acid, bis(4-hydroxyphenyl)acetic acid, 4,4-bis(4-hydroxyphenyl)pentanoic acid, and homogentisic acid; and a sulfonic acid group or sulfonate salt group-containing polyols, such as sodium 1,4-butanediol sulfonate.

The method for producing the urethane (meth)acrylate-based compound is not particularly limited, and examples thereof include a method in which a hydroxyl group-containing (meth)acrylic compound and a polyvalent isocyanate compound are mixed in an inert gas atmosphere and are reacted usually at 30 to 80°C for 2 to 10 hours. In this reaction, a urethanization catalyst such as tin octenoate, di-n-butyltin dilaurate, lead octylate, potassium octylate, potassium acetate, stannous octoate, or triethylenediamine is preferably used.

In the case of using a reaction product with a polyol as a urethane (meth)acrylate-based compound, for example, a hydroxyl group-containing (meth)acrylic compound is reacted with a reaction product obtained by reacting the polyol with the polyvalent isocyanate compound. In the reaction of the polyvalent isocyanate compound with the polyol, a metal catalyst, such as dibutyltin dilaurate, or an amine-based catalyst, such as 1,8-diazabicyclo[5.4.0]undecene-7 is also preferably used for the purpose of accelerating the reaction.

The weight average molecular weight of the urethane (meth)acrylate-based compound is preferably from 300 to 10000, more preferably from 500 to 5000, particularly preferably from 750 to 4000, especially preferably from 1000 to 3500, and most preferably from 1250 to 3000. The method of measuring the weight average molecular weight is the same as described above.

Examples of the ethylenically unsaturated monomer having an ethylenically unsaturated group include a monofunctional monomer having one ethylenically unsaturated group per molecule, a bifunctional monomer having two ethylenically unsaturated groups per molecule, and a tri- or higher functional monomer having three or more ethylenically unsaturated groups per molecule.

Examples of the monofunctional monomer include styrene, vinyltoluene, chlorostyrene, $\alpha$-methylstyrene, methyl (meth)acrylate, ethyl (meth)acrylate, acrylonitrile, vinyl acetate, 2-hydroxyethyl (meth)acrylate, 2-hydroxypropyl (meth)acrylate, 2-hydroxybutyl (meth)acrylate, phenoxyethyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, glycerin mono(meth)acrylate, glycidyl (meth)acrylate, lauryl (meth)acrylate, cyclohexyl (meth)acrylate, isobornyl (meth)acrylate, tricyclodecanyl (meth) acrylate, dicyclopentenyl (meth)acrylate, n-butyl (meth)acrylate, hexyl (meth)acrylate, heptyl (meth)acrylate, octyl (meth) acrylate, nonyl (meth)acrylate, decyl (meth)acrylate, isodecyl (meth)acrylate, dodecyl (meth)acrylate, n-stearyl (meth) acrylate, benzyl (meth)acrylate, phenol ethylene oxide-modified (meth)acrylate, nonylphenol propylene oxide-modified (meth)acrylate, half ester (meth)acrylates of a phthalic acid derivative such as 2-(meth)acryloyloxy-2-hydroxypropyl phthalate, furfuryl (meth)acrylate, carbitol (meth)acrylate, benzyl (meth)acrylate, butoxyethyl (meth)acrylate, allyl (meth) acrylate, acryloylmorpholine, 2-hydroxyethylacrylamide, N-methylol (meth)acrylamide, N-vinylpyrrolidone, 2-vinylpyridine, and 2-(meth)acryloyloxyethyl acid phosphate monoester.

Examples of the bifunctional monomer include ethylene glycol di(meth)acrylate, diethylene glycol di(meth) acrylate, tetraethylene glycol di(meth)acrylate, polyethylene glycol di(meth)acrylate, propylene glycol di(meth)acrylate, dipropylene glycol di(meth)acrylate, polypropylene glycol di(meth)acrylate, butylene glycol di(meth)acrylate, neopentyl glycol di(meth)acrylate, ethylene oxide-modified bisphenol A type di(meth)acrylate, propylene oxide-modified bisphenol A type di(meth)acrylate, 1,6-hexanediol di(meth)acrylate, 1,6-hexanediol ethylene oxide-modified di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, phthalic acid diglycidyl ester di(meth)acrylate, hydroxypivalic acid-modified neopentyl glycol di(meth)acrylate, isocyanuric acid ethylene oxide-modified diacrylate, and 2-(meth)acryloyloxyethyl

acid phosphate diester.

Examples of the tri- or higher functional monomer include trimethylolpropane tri(meth)acrylate, pentaerythritol tri(meth)acrylate, pentaerythritol tetra(meth)acrylate, dipentaerythritol tri(meth)acrylate, dipentaerythritol tetra(meth) acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, isocyanuric acid ethylene oxide-modified tri(meth) acrylate, ethylene oxide-modified dipentaerythritol penta(meth)acrylate, ethylene oxide-modified dipentaerythritol hexa(meth)acrylate, ethylene oxide-modified pentaerythritol tri(meth)acrylate, ethylene oxide-modified pentaerythritol tetra(meth)acrylate, and succinic acid-modified pentaerythritol tri(meth)acrylate.

Examples of the ethylenically unsaturated monomer include, besides the above-described ones, Michael adducts of (meth)acrylic acid or 2-(meth)acryloyloxyethyldicarboxylic acid monoesters. Examples of the Michael adduct of (meth)acrylic acid include a (meth)acrylic acid dimer, a (meth)acrylic acid trimer, and a (meth)acrylic acid tetramer. Examples of the 2-(meth)acryloyloxyethyldicarboxylic acid monoester, which is a carboxylic acid having a specific substituent, include 2-(meth)acryloyloxyethylsuccinic acid monoester, 2-(meth)acryloyloxyethylphthalic acid monoester, and 2-(meth)acryloyloxyethylhexahydrophthalic acid monoester. Furthermore, examples include oligoester acrylates.

These unsaturated group-containing compounds (C), such as urethane (meth)acrylate-based compounds or ethylenically unsaturated monomers, may be used alone or in combination of two or more types.

When the present composition 1 contains the unsaturated group-containing compound (C), the content thereof is preferably 5 parts by mass or less, more preferably 4 parts by mass or less, even more preferably 3 parts by mass or less, particularly preferably 2 parts by mass or less, especially preferably 1 part by mass or less, and most preferably 0 parts by mass, per 100 parts by mass of the polyester (A). That is, the present composition 1 preferably contains no unsaturated group-containing compound (C). When the content is too high, the cohesive force of a pressure-sensitive adhesive layer tends to increase too much after curing by an active energy ray, resulting in insufficient elongation and pressure-sensitive adhesive force, and the unsaturated group tends to react by heat, resulting in an increase in viscosity and insufficient heat resistance, such as occurrence of gelation.

When the present composition 2 contains the unsaturated group-containing compound (C), the content thereof is less than 15 parts by mass, preferably 10 parts by mass or less, more preferably 5 parts by mass or less, even more preferably 3 parts by mass or less, particularly preferably 2 parts by mass or less, especially preferably 1 part by mass or less, and most preferably 0 parts by mass, per 100 parts by mass of the polyester (A). That is, the present composition 2 preferably contains no unsaturated group-containing compound (C). When the content is too high, the cohesive force of a pressure-sensitive adhesive layer tends to increase too much after curing by an active energy ray, resulting in insufficient elongation and pressure-sensitive adhesive force, and the unsaturated group tends to react by heat, resulting in an increase in viscosity and insufficient thermal stability, such as occurrence of gelation.

(D)

The present composition may contain a crosslinker (D) for the purpose of increasing the cohesive force. The crosslinker (D) only needs to be a compound having a functional group that reacts with a functional group such as a hydroxyl group or a carboxy group contained in the polyester (A). Examples of such a compound include epoxy-based compounds, such as bisphenol A-epichlorohydrin type epoxy resins, ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, pentaerythritol polyglycidyl erythritol, and diglycerol polyglycidyl ether; aziridine-based compounds, such as tetramethylolmethane-tri-β-aziridinyl propionate, trimethylolpropane tri-β-aziridinyl propionate, N,N'-diphenylmethane-4,4'-bis(1-aziridinecarboxyamide), and N,N'-hexamethylene-1,6-bis(1-aziridinecarboxyamide); melamine-based compounds, such as hexamethoxymethylmelamine, hexaethoxymethylmelamine, hexapropoxymethylmelamine, hexabutoxymethylmelamine, hexapentyloxymethylmelamine, hexahexyloxymethylmelamine, and melamine resins; isocyanate-based compounds, such as 2,4-tolylene diisocyanate, 2,6-tolylene diisocyanate, hydrogenated tolylene diisocyanate, 1,3-xylylene diisocyanate, 1,4-xylylene diisocyanate, hexamethylene diisocyanate, diphenylmethane-4,4-diisocyanate, isophorone diisocyanate, 1,3-bis(isocyanatomethyl)cyclohexane, tetramethylxylylene diisocyanate, 1,5-naphthalene diisocyanate, triphenylmethane triisocyanate, adducts of these polyisocyanate compounds with a polyol compound such as trimethylolpropane, biurets and isocyanurates of these polyisocyanate compounds; aldehyde-based compounds, such as glyoxal, malondialdehyde, succindialdehyde, maleindialdehyde, glutardialdehyde, formaldehyde, acetaldehyde, and benzaldehyde; amine-based compounds, such as hexamethylenediamine, triethyldiamine, polyethylenimine, hexamethylenetetramine, diethylenetriamine, triethylentetramine, isophoronediamine, amino resins, and polyamides; and metal chelate compounds, such as acetylacetone and acetoacetyl ester coordination compounds of multiple metals, such as aluminum, iron, copper, zinc, tin, titanium, nickel, antimony, magnesium, vanadium, chromium, and zirconium. Among these, a polyisocyanate-based compound is suitably used from the viewpoint of reactivity with the polyester (A).

These crosslinkers (D) may be used alone or in combination of two or more types. However, the crosslinker (D)

excludes a hydrolysis inhibitor (E) described below.

The polyisocyanate-based compound is not particularly limited, and examples thereof include aromatic, aliphatic, and alicyclic polyisocyanates. Among these, examples include polyisocyanates, such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; trimer compounds or multimer compounds of these polyisocyanates; biuret type polyisocyanates; or reaction products of these polyisocyanates and a polyol. Among these, tolylene diisocyanate, xylylene diisocyanate, or hexamethylene diisocyanate is preferable from the viewpoint of excellent reactivity. One type of these or a combination of two or more types thereof may be used.

In the case of using the crosslinker (D), the content thereof can be appropriately determined depending on the amount of functional groups contained in the polyester (A) and the molecular weight of the polyester (A), and for the purpose of controlling the pressure-sensitive adhesive force after irradiation with an active energy ray. The content is preferably 5 parts by mass or less, more preferably 3 parts by mass or less, even more preferably 2 parts by mass or less, particularly preferably 1 part by mass or less, especially preferably 0.5 parts by mass or less, and most preferably 0 parts by mass, per 100 parts by mass of the polyester (A).

When the content of the crosslinker (D) is too high, the polyester (A) tends to react with the crosslinker (D) during hot melt coating, resulting in an increase in melt viscosity, insufficient pot life, and deterioration of the appearance of the coating film due to gelation.

Hydrolysis Inhibitor (E)

The present composition preferably contains a hydrolysis inhibitor (E) from the viewpoints of improving the hydrolysis resistance and moist-heat resistance of the polyester (A). The hydrolysis inhibitor (E) is not particularly limited, and a hydrolysis inhibitor known in the art can be used. Examples thereof include compounds that react with and bond to the terminal carboxy group of the polyester (A), and specific examples include compounds having a functional group such as a carbodiimide group or an oxazoline group. Among these, a carbodiimide group-containing compound is preferable from the viewpoint of excellent reactivity with a carboxy group.

As the carbodiimide group-containing compound, a known carbodiimide having one or more carbodiimide groups (-N=C=N-) in the molecule is generally used. Examples thereof include a monomeric carbodiimide compound (E1) having one carbodiimide group in the molecule and a polymeric carbodiimide compound (E2) having at least two or more carbodiimide groups in the molecule. Among these, a monomeric carbodiimide compound having one carbodiimide group in the molecule is preferably from the viewpoint of suppressing viscosity increase at high temperatures, having excellent heat resistance, and further having excellent moist-heat resistance.

Examples of the monomeric carbodiimide compound (E1) include dicyclohexylcarbodiimide, diisopropylcarbodiimide, diphenylcarbodiimide, bis(methylphenyl)carbodiimide, bis(methoxyphenyl)carbodiimide, bis(nitrophenyl)carbodiimide, bis(dimethylphenyl)carbodiimide, bis(diisopropylphenyl)carbodiimide, bis(di-t-butylphenyl)carbodiimide, N-ethyl-N'-(3-dimethylaminopropyl)carbodiimide, bis(triphenylsilyl)carbodiimide, and cyclic carbodiimides. Among these, diisopropylcarbodiimide, bis(methoxyphenyl)carbodiimide, bis(diisopropylphenyl)carbodiimide, N-ethyl-N'-(3-dimethylaminopropyl)carbodiimide, or bis(triphenylsilyl)carbodiimide is preferable. From the viewpoint of excellent reactivity with the carboxy group of the polyester (A), excellent compatibility, and excellent moisture-heat durability, bis(diisopropylphenyl)carbodiimide is preferable. These may be used alone or in combination of two or more types.

Examples of the polymeric carbodiimide compound (E2) include those obtained by subjecting a diisocyanate described below to decarboxylation condensation reaction. Examples of the diisocyanate include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate. These may be used alone or in combination of two or more types.

In the case of using the hydrolysis inhibitor (E), the content thereof is preferably from 0.01 to 5 parts by mass, more preferably from 0.1 to 4 parts by mass, even more preferably from 0.2 to 3 parts by mass, particularly preferably from 0.3 to 2 parts by mass, especially preferably from 0.4 to 1.5 parts by mass, and most preferably from 0.5 to 1 part by mass, per 100 parts by mass of the polyester (A). When the content of the hydrolysis inhibitor is too high, the active energy ray curability and pressure-sensitive adhesive force tend to decrease, and the coating film appearance tends to be insufficient due to poor compatibility with the polyester. When the content is too low, the hydrolysis resistance tends to decrease, and the moisture-heat durability tends to be insufficient.

For the content of the hydrolysis inhibitor (E), the blending amount thereof is preferably optimized depending on the acid value of the polyester (A). The molar ratio of the total amount (ii) of the functional groups of the hydrolysis inhibitor

(E) to the total amount (i) of the carboxy groups determined from the acid value of the polyester (A) (i.e., (ii)/(i)) is preferably 0.5 ≤ (ii)/(i), more preferably 1 ≤ (ii)/(i) ≤ 1000, even more preferably 1.5 ≤ (ii)/(i) ≤ 500, particularly preferably 2 ≤ (ii)/(i) ≤ 250, especially preferably 2.5 ≤ (ii)/(i) ≤ 100, and most preferably 3 ≤ (ii)/(i) ≤ 50.

When the content ratio of (ii) to (i) is too high, the coating film appearance tends to be insufficient due to poor compatibility with the polyester (A), and the active energy ray curability, pressure-sensitive adhesive force, cohesive force, and hydrolysis resistance tend to decrease. When the content ratio of (ii) to (i) is too low, the hydrolysis resistance and moisture-heat durability tend to decrease.

Antioxidant (F)

The present composition more preferably contains an antioxidant (F) from the viewpoint of excellent heat resistance of the polyester (A) and excellent stability of a pressure-sensitive adhesive sheet, and from the viewpoint that a change in viscosity can be suppressed under application of a thermal history of hot melt coating or the like.

Examples of the antioxidant (F) include phenol-based antioxidants, hindered phenol-based antioxidants, amine-based antioxidants, hindered amine-based antioxidants, sulfur-based antioxidants, and phosphoric acid-based antioxidants. Among these, the antioxidant (F) is preferably at least one selected from hindered phenol-based antioxidants, hindered amine-based antioxidants, and phosphoric acid-based antioxidants. **In** particular, an antioxidant (F) composed of a hindered phenol-based compound is preferable.

Examples of the hindered phenol-based antioxidant include antioxidants having a hindered phenol structure in which a group having a large steric hindrance, such as a tertiary butyl group, is bonded to at least one of carbon atoms adjacent to the carbon atom on the aromatic ring of phenol bonded to the hydroxyl group.

In the case of using the antioxidant (F), the content thereof is preferably from 0.001 to 10 parts by mass, more preferably from 0.01 to 5 parts by mass, even more preferably from 0.05 to 3 parts by mass, particularly preferably from 0.1 to 2 parts by mass, and especially preferably from 0.3 to 1.0 part by mass, per 100 parts by mass of the polyester (A).

When the content is too low, the heat resistance tends to be insufficient, whereas when the content is too high, the active energy ray curability tends to be insufficient.

Tackifier Resin (G)

The present composition may contain a tackifier resin (G) from the viewpoint that pressure-sensitive adhesive properties, such as pressure-sensitive adhesive force and tackiness, and coating suitability can be improved.

The tackifier resin (G) is not particularly limited, and a tackifier resin known in the art can be used. Examples of the tackifier resin (G) include hydrocarbon-based resins, terpene-based resins, phenol-based resins, rosin-based resins, xylene resins, epoxy-based resins, polyamide-based resins, ketone-based resins, and elastomer-based resins. These may be used alone or in combination of two or more types. Among these, a hydrocarbon-based resin or a terpene-based resin is preferable from the viewpoints of excellent compatibility with the polyester (A) and excellent heat resistance, and a hydrocarbon-based resin is more preferable from the viewpoint of excellent active energy ray curability.

Examples of the hydrocarbon-based resin include various hydrocarbon-based resins, such as aliphatic hydrocarbon resins, aromatic hydrocarbon resins, aliphatic cyclic hydrocarbon resins, aliphatic/aromatic petroleum resins (styrene-olefin-based copolymers and the like), aliphatic/alicyclic petroleum resins, hydrogenated aromatic hydrocarbon resins, hydrogenated aliphatic hydrocarbon resins, coumarone-based resins, and coumarone-indene-based resins. Among these, an aromatic hydrocarbon resin or a hydrogenated aromatic hydrocarbon resin is preferable from the viewpoints of excellent tackiness and heat resistance.

Examples of the terpene-based resin include terpene resins, terpene phenolic resins, and aromatic modified terpene resins, and specific examples include $\alpha$-pinene polymers, $\beta$-pinene polymers, dipentene polymers, and terpene-based resins obtained by phenolic modification, aromatic modification, hydrogenation modification, or hydrocarbon modification of these polymers. From the viewpoints of excellent compatibility with the polyester (A) and excellent tackiness, a terpene phenolic resin is preferable.

As the phenol-based resin, for example, a condensate of any phenol analog such as phenol, m-cresol, 3,5-xylenol, p-alkylphenol, or resorcin, with formaldehyde can be used. Furthermore, resol obtained by addition reaction of the phenol analog with formaldehyde in the presence of an alkali catalyst, novolak obtained by condensation reaction of the phenol analog with formaldehyde in the presence of an acid catalyst, a rosin-modified phenolic resin obtained by addition of phenol to a rosin analog such as an unmodified or modified rosin or a derivative thereof, in the presence of an acid catalyst and thermal polymerization can be used.

Examples of the rosin-based resin include rosin resins, polymerized rosin resins, hydrogenated rosin resins, rosin ester resins, hydrogenated rosin ester resins, rosin phenolic resins, and polymerized rosin esters. Specifically, an unmodified rosin (raw rosin), such as gum rosin, wood rosin, or tall oil rosin, a modified rosin obtained by hydrogenation, disproportionation, polymerization, or another chemical modification of the unmodified rosin, or a derivative thereof can be

used.

The tackifier resin (G) preferably has an acid value of 30 mg KOH/g or less, particularly preferably 15 mg KOH/g or less, even more preferably 10 mg KOH/g or less, especially preferably 6 mg KOH/g or less, and most preferably 3 mg KOH/g, from the viewpoint of moist-heat resistance. In the case of using a plurality of tackifier resins in combination, the average of the acid values is preferably in the above range.

The softening point (e.g., measured by a ring and ball method) of the tackifier resin (G) is preferably from 60 to 170°C, more preferably from 80 to 160°C, even more preferably from 90 to 150°C, and particularly preferably from 100 to 140°C. When the softening point is within the above range, the tackiness and pressure-sensitive adhesive force can be improved, which is preferable.

In the present disclosure, the tackifier resin (G) is preferably derived from a plant from the viewpoint of global environmental conservation. Examples of the plant-derived tackifier resin include terpene-based resins and rosin-based resins.

In the case of using the tackifier resin (G), the content thereof is preferably 50 parts by mass or less, more preferably from 0.1 to 30 parts by mass, even more preferably from 1 to 20 parts by mass, particularly preferably from 2 to 15 parts by mass, and especially preferably from 3 to 10 parts by mass, per 100 parts by mass of the polyester (A). When the content is within the above range, the tackiness and pressure-sensitive adhesive force can be improved, which is preferable. When the content is too high, the glass transition temperature of a pressure-sensitive adhesive layer tends to increase, resulting in insufficient tackiness and pressure-sensitive adhesive force and a reduction in active energy ray curability.

Active Energy Ray-Curable Composition

The present composition can contain, besides the polyester (A), the compound (B) having a photoreactive group, the unsaturated group-containing compound (C), the crosslinker (D), the hydrolysis inhibitor (E), the antioxidant (F), and the tackifier resin (G), an additive as an additional component, such as a catalyst, a plasticizer, an ultraviolet absorber, an antistatic agent, a silane coupling agent, a flux, a flame retardant, a dispersant, an emulsifier, a defoamer, a leveling agent, an ion trapping agent, or an additional powdery or particulate additive, such as an inorganic or organic filler, a metal powder, or a pigment as long as the effects of the present disclosure are not impaired. The present composition may contain a small amount of an impurity or the like contained in a raw material for producing a component of the pressure-sensitive adhesive. These may be used alone or in combination of two or more types.

When the present composition contains such an additional component, the content thereof is preferably 70 mass% or less, more preferably from 0.001 to 50 mass%, particularly preferably from 0.005 to 30 mass%, and even more preferably from 0.01 to 10 mass% of the entirety of the present composition.

The present composition can be obtained, for example, by preparing the polyester (A), a necessary optional component, and the like, blending, heat-melting, and dispersing them during the production of the polyester (A), or blending them in a solution of the polyester (A) dissolved in an organic solvent and dispersing the mixture using a mixing roller or the like.

The melt viscosity (160°C) of the present composition 1 is preferably 200 Pa·s or less, more preferably from 1 to 150 Pa·s, even more preferably from 2 to 100 Pa·s, particularly preferably from 3 to 80 Pa·s, especially preferably from 4 to 60 Pa·s, and most preferably from 5 to 40 Pa·s. When the melt viscosity is too low, an orange peel-like roughness tends to occur in the coating film appearance, resulting in poor coating suitability, and insufficient heat resistance, holding force, pressure-sensitive adhesive force, and moisture-heat durability. When the melt viscosity is too high, the coating film tends to have a streaked appearance, resulting in insufficient coating suitability.

The melt viscosity (130°C) of the present composition 2 is preferably 500 Pa.s or less, more preferably from 1 to 400 Pa·s, even more preferably from 3 to 300 Pa·s, particularly preferably from 5 to 200 Pa·s, especially preferably from 10 to 150 Pa·s, and most preferably from 15 to 100 Pa·s. When the melt viscosity is too low, an orange peel-like roughness tends to occur in the coating film appearance, resulting in poor coating suitability, and insufficient heat resistance, holding force, pressure-sensitive adhesive force, and moisture-heat durability. When the melt viscosity is too high, the coating film tends to have a streaked appearance, resulting in insufficient coating suitability.

Furthermore, the present composition preferably has a low rate of change in melt viscosity before and after a heat resistance test (temperature 200°C, 3 hours, under air conditions) from the viewpoints of thermal stability and coating suitability. The rate of change in melt viscosity is preferably from 20 to 500%, more preferably from 30 to 400%, even more preferably from 40 to 300%, particularly preferably from 50 to 250%, especially preferably from 60 to 200%, and most preferably from 70 to 150%. When the rate of change in melt viscosity before and after the thermal history is out of the above range, the pressure-sensitive adhesive tends to gel or decompose, resulting in insufficient coating suitability, and the pressure-sensitive adhesive force and adherence tend to be insufficient.

The rate of change in melt viscosity (%) is calculated from the following equation.

Rate of change in melt viscosity (%) = [(melt viscosity after heat resistance test)/(melt viscosity before heat

resistance test)] x 100

The present composition has active energy ray curability and thus has excellent heat resistance even without having an unsaturated group, and further forms a pressure-sensitive adhesive with excellent pressure-sensitive adhesive force and holding force when used as a pressure-sensitive adhesive composition. In particular, the present composition is useful as a solvent-free active energy ray-curable pressure-sensitive adhesive composition used for a pressure-sensitive adhesive tape for electronic members, a pressure-sensitive adhesive tape for labels, and the like.

Solvent

The present composition is preferably used as a solvent-free active energy ray-curable pressure-sensitive adhesive composition but may be blended with a solvent to appropriately adjust the viscosity of the composition and facilitate handling during formation of a coating film.

Examples of the solvent include ketone analogs, such as acetone, methyl ethyl ketone, methyl isobutyl ketone, and cyclohexanone; ester analogs, such as ethyl acetate; ether analogs, such as ethylene glycol monomethyl ether; amide analogs, such as N,N-dimethylformamide and N,N-dimethylacetamide; alcohol analogs, such as methanol and ethanol; alkane analogs, such as hexane and cyclohexane; and aromatic analogs, such as toluene and xylene. Among these, from the viewpoint of VOC emission control, the solvent is preferably a ketone-based solvent or an ester-based solvent, particularly preferably methyl ethyl ketone, cyclohexanone, or ethyl acetate, and from the viewpoints of low boiling point and excellent drying efficiency, the solvent is even more preferably methyl ethyl ketone or ethyl acetate.

Only one type of the solvents described above may be used, or two or more types thereof may be mixed and used in any combination and proportions.

The content of the solvent is preferably less than 10 mass%, more preferably 5 mass% or less, even more preferably 3 mass% or less, and particularly preferably 1 mass% or less, relative to the entire present composition (containing a solvent). The lower limit is 0 mass%, and the present composition preferably contains no solvent. When the content of the solvent is too high, the amount of energy required to volatilize the solvent in the coating process tends to increase, resulting in insufficient environmental load reduction effect.

Active Energy Ray-Curable Composition

An active energy ray-curable composition according to an embodiment of the present disclosure is an active energy ray-curable composition containing a polyester (A) having a structural unit derived from a polyvalent carboxylic acid ($\alpha$) and a structural unit derived from a polyhydric alcohol ($\beta$), in which the polyester (A) is a polyester (A1) further containing a photoreactive group and having a structural unit derived from a compound (B) having a photoreactive group.

As the polyester (A1), the same polyester as described above in "Polyester (A)" can be used.

The active energy ray-curable composition according to an embodiment of the present disclosure contains a polyester (A) having a structural unit derived from a polyvalent carboxylic acid ($\alpha$) and a structural unit derived from a polyhydric alcohol ($\beta$), and a compound (B) having a photoreactive group, in which the content of an unsaturated group-containing compound (C) is less than 15 parts by mass per 100 parts by mass of the polyester (A).

As the polyester (A), the same polyester as described above in "Polyester (A)" can be used, and the polyester (A) is particularly preferably a polyester (A2) containing no photoreactive group.

Furthermore, the active energy ray-curable composition may contain the compound (B) having a photoreactive group, the unsaturated group-containing compound (C), the crosslinker (D), the hydrolysis inhibitor (E), the antioxidant (F), the tackifier resin (G), and an additive or the like described for the present composition, and the preferred physical properties and contents are also the same as described above.

Pressure-Sensitive Adhesive

A pressure-sensitive adhesive according to an embodiment of the present disclosure is obtained by curing (crosslinking) the present composition or the active energy ray-curable composition, and the resultant pressure-sensitive adhesive can exhibit excellent effects in heat resistance, pressure-sensitive adhesive force, and holding force.

The "crosslinking" in the present disclosure means intentionally crosslinking the present composition by, for example, heat and/or light, and crosslinking by light is more preferable, and crosslinking by an active energy ray, such as ultraviolet ray or an electron beam, is particularly preferable. The degree of crosslinking can be controlled according to desired physical properties and applications.

The degree of crosslinking can be confirmed by the gel fraction of the pressure-sensitive adhesive, and the gel fraction is preferably from 1 to 100%, more preferably from 3 to 90%, even more preferably from 5 to 80%, particularly preferably from 10 to 70%, especially preferably from 15 to 60%, most preferably from 20 to 50%, and especially preferably from 25 to 45%. When the gel fraction is too low, the heat resistance, holding force, pressure-sensitive adhesive force, and

moisture-heat durability tend to be insufficient. When the gel fraction is too high, the tackiness and pressure-sensitive adhesive force tend to be insufficient.

The gel fraction is a measure of the degree of crosslinking and is calculated, for example, by the following method. Specifically, a pressure-sensitive adhesive sheet (not provided with a release sheet) in which a pressure-sensitive adhesive layer is formed on a polymer sheet (e.g., a PET film) serving as a substrate is wrapped with a 200-mesh SUS wire net and immersed in toluene or ethyl acetate at 23°C for 24 hours, and the mass percentage of an insoluble pressure-sensitive adhesive component remaining in the wire net after immersion relative to the mass of a pressure-sensitive adhesive component before immersion is defined as the gel fraction. It should be noted that the mass of the substrate is subtracted in advance.

The pressure-sensitive adhesive is formed into a sheet-like pressure-sensitive adhesive layer, whereby a pressure-sensitive adhesive sheet can be obtained.

The pressure-sensitive adhesive layer is preferably formed on one or both surfaces of a supporting substrate.

In the present disclosure, the "sheet" is described as a meaning also including "film" and "tape."

Pressure-Sensitive Adhesive Sheet

A pressure-sensitive adhesive sheet can be produced, for example, as follows.

The pressure-sensitive adhesive sheet can be produced according to a known general method for producing a pressure-sensitive adhesive sheet. For example, the present composition is applied onto a substrate and dried, a release sheet is bonded to the composition layer surface on the opposite side, and the resultant product is further cured as necessary, whereby a pressure-sensitive adhesive sheet having a pressure-sensitive adhesive layer is obtained on the substrate.

The pressure-sensitive adhesive sheet can also be obtained by applying the present composition onto a release sheet, drying the composition, bonding a substrate to the composition layer surface on the opposite side, and further curing the resultant product as necessary.

Furthermore, a substrate-less double-sided pressure-sensitive adhesive sheet can be produced by forming a pressure-sensitive adhesive layer on a release sheet and bonding the release sheet to the pressure-sensitive adhesive layer surface on the opposite side.

When the resulting pressure-sensitive adhesive sheet or substrate-less double-sided pressure-sensitive adhesive sheet is used, the release sheet is peeled off from the pressure-sensitive adhesive layer, and the pressure-sensitive adhesive layer and an adherend are bonded to each other.

Examples of the substrate include sheets composed of at least one synthetic resin selected from the group consisting of polyester-based resins, such as poly(ethylene naphthalate), poly(ethylene terephthalate), poly(butylene terephthalate), poly(butylene succinate), polylactic acid, poly(ethylene terephthalate)/isophthalate copolymers, poly(butylene adipate)/terephthalate copolymers, hydroxybutyrate/hydroxyhexanoate copolymers, and polycaprolactone; polyolefin-based resins, such as polyethylene, polypropylene, and polymethylpentene; poly(ethylene fluoride) resins, such as poly(vinyl fluoride), poly(vinylidene fluoride), and poly(ethylene fluoride); polyamides, such as nylon 6 and nylon 6,6; vinyl polymers, such as poly(vinyl chloride), poly(vinyl chloride)/vinyl acetate copolymers, ethylene-vinyl acetate copolymers, ethylene-vinyl alcohol copolymers, poly(vinyl alcohol), and vinylon; cellulose-based resins, such as cellulose triacetate and cellophane; acrylic resins, such as poly(methyl methacrylate), poly(ethyl methacrylate), poly(ethyl acrylate), and poly(butyl acrylate); fluorine-based resins; polystyrene; polycarbonate; acrylonitrile-butadiene-styrene copolymers; acrylonitrile-styrene-acrylic ester copolymers; polyarylate; polyimide; cycloolefin polymers; urethane acrylate-based resins; and polyester and the like; metal foils of aluminum, copper, and iron; papers such as wood-free paper and glassine paper; and woven fabrics and nonwoven fabrics composed of glass fibers, natural fibers, and synthetic fibers. These substrates can be used in the form of a single-layer body or a multilayer body in which two or more types of substrates are laminated.

Among these, a substrate composed of a polyester, a nonwoven fabric, or a polyolefin-based resin is particularly preferable.

As the substrate, a foam substrate, for example, a foam sheet composed of a foam of a synthetic resin, such as a polyurethane foam, a polyethylene foam, or a polyacrylate foam, can be used. Among these, a polyurethane foam or a polyethylene foam is preferable from the viewpoint of excellent balance between heat resistance, conformability to an adherend, and adhesive strength.

The thickness of the substrate is, for example, preferably from 1 to 1000 μm, particularly preferably from 3 to 500 μm, even more preferably from 5 to 250 μm, and especially preferably from 10 to 100 μm.

As the release sheet, for example, a product obtained by applying a release treatment to a sheet composed of any synthetic resin, or to paper, cloth, or a nonwoven fabric exemplified above for the substrate, can be used. As the release sheet, a silicone-based release sheet is preferably used.

For the method for applying the present composition, for example, a gravure roll coater, a reverse roll coater, a

kiss roll coater, a dip roll coater, a bar coater, a knife coater, a spray coater, a comma coater, or the like is used.

For drying conditions, the drying temperature is preferably from 60 to 140°C and particularly preferably from 80 to 120°C, and the drying time is preferably from 0.5 to 30 minutes and particularly preferably from 1 to 5 minutes.

The thickness of the pressure-sensitive adhesive layer of the pressure-sensitive adhesive sheet or the substrate-less double-sided pressure-sensitive adhesive sheet is preferably from 1 to 500 μm, particularly preferably from 3 to 200 μm, even more preferably from 5 to 100 μm, and especially preferably from 10 to 50 μm. When the thickness of the pressure-sensitive adhesive layer is too small, the pressure-sensitive adhesive force tends to decrease. When the thickness is too large, the uniformity of the coating film tends to decrease, resulting in poor appearance, and air bubbles tend to enter the coating film, resulting in insufficient optical properties.

The thickness of the pressure-sensitive adhesive layer is determined by subtracting a measured value of the thickness of the constituent members other than the pressure-sensitive adhesive layer from a measured value of the thickness of the entire pressure-sensitive adhesive sheet using "ID-C112B" available from Mitutoyo Corporation.

Furthermore, the pressure-sensitive adhesive sheet may be protected by providing a release sheet on the outer side of the pressure-sensitive adhesive layer as necessary. In the pressure-sensitive adhesive sheet in which the pressure-sensitive adhesive layer is formed on one side of the substrate, the pressure-sensitive adhesive layer can also be protected by applying a release treatment to the substrate surface opposite to the pressure-sensitive adhesive layer and using the release-treated surface.

## Examples

Hereinafter, the present disclosure will be more specifically described with reference to Examples, but the present disclosure is not limited to the Examples below as long as the gist of the present disclosure is not deviated. In the Examples, the terms "parts" and "%" mean that values are based on mass.

Glass transition temperature (°C), acid value (mg KOH/g), hydroxyl value (mg KOH/g), epoxy group concentration (mmol/g), ester bond concentration (mmol/g), unsaturated group concentration (mmol/g), crystal melting heat (J/g), number average molecular weight (Mn), weight average molecular weight (Mw), peak-top molecular weight (Mp), polydispersity, melt viscosity (Pa·s), and biomass content were measured according to the description of the present specification.

### Production of Polyester (A)

The composition shown below in Table 1 includes composition proportions (resin composition proportions) of a finished product, and corresponds to the relative proportion (molar proportion) of the amount of each constituent monomer of the resulting polyester and its mass%.

### Production of Polyester (A1-1)

A reactor equipped with a thermometer, a stirrer, a rectification column, and a nitrogen inlet tube was charged with 51.9 parts of isophthalic acid (IPA), 592.1 parts of sebacic acid (SebA), and 4.2 parts of 3,3',4,4'-benzophenonetetracarboxylic dianhydride (BTDA) as polyvalent carboxylic acids (α), 80.8 parts of ethylene glycol (EG) and 67.0 parts of neopentyl glycol (NPG) as polyhydric alcohols (β), and 0.1 parts of tetrabutyl titanate as a catalyst. The temperature was raised over 2.5 hours until the internal temperature reached 260°C, and the mixture was esterified at 260°C for 1.5 hours.

Subsequently, 0.1 parts of tetrabutyl titanate as a catalyst was added, the pressure in the system was reduced to 2.5 hPa, and a polymerization reaction was carried out over 2 hours, to produce a polyester (A1-1).

### Production of Polyesters (A1-2, A1-3, and A2-1)

Polyesters (A1-2, A1-3, and A2-1) were produced in the same manner as in A1-1 except for changing the resin compositions as shown in Table 1 below.

### Production of Polyester (A2-2)

A reactor equipped with a thermometer, a stirrer, a rectification column, and a nitrogen inlet tube was charged with 96.1 parts of isophthalic acid (IPA) and 467.8 parts of sebacic acid (SebA) as polyvalent carboxylic acids (α), 130.3 parts of 1,4-butanediol (1,4BG), 271 parts of neopentyl glycol (NPG), 29.7 parts of 1,6-hexanediol (1,6HG), and 5 parts of trimethylolpropane (TMP) as polyhydric alcohols (β), and 0.1 parts of tetrabutyl titanate as a catalyst. The temperature was raised over 2.5 hours until the internal temperature reached 260°C, and the mixture was esterified at 260°C for 1.5 hours.

Subsequently, 0.1 parts of tetrabutyl titanate as a catalyst was added, the pressure in the system was reduced to

2.5 hPa, and a polymerization reaction was carried out over 2 hours to produce a polyester (A2-2).

Production of Polyesters (A2-3 and A2-4)

Polyesters (A2-3 and A2-4) were produced in the same manner as in A2-2 except for changing the resin compositions as shown in Table 2 below.

The resin compositions (structural units derived from the components) of the resulting polyesters (A) are shown in Tables 1 and 3, and their physical properties are shown in Tables 2 and 4. The abbreviations shown in Tables 1 and 3 are as follows.

Polyvalent Carboxylic Acid (α)

Aliphatic Polyvalent Carboxylic Acid (α1)

- SebA: sebacic acid (derived from biomass)
- AdA: adipic acid
- SuA: succinic acid (derived from biomass)

Aromatic Polyvalent Carboxylic Acid (α2)

- IPA: isophthalic acid
- BTDA: 3,3',4,4'-benzophenonetetracarboxylic dianhydride

The BTDA is also a compound (b1) having a hydrogen abstraction-type photoreactive group.

Polyhydric Alcohol (β)

Linear Aliphatic Polyhydric Alcohol (β1-1)

- EG: ethylene glycol (derived from biomass)
- 1,3PG: 1,3-propanediol (derived from biomass)
- 1,4BG: 1,4-butanediol (derived from biomass)
- 1,6HG: 1,6-hexanediol

Branched Fatty Acid Polyhydric Alcohol (β1-2) Having Hydrocarbon Group in at Least One Side Chain

- NPG: neopentyl glycol
- TMP: trimethylolpropane

[Table 1]

| Polyester (A) | | Polyvalent carboxylic acid (α) | | | Polyhydric alcohol (β) | |
|---|---|---|---|---|---|---|
| | | SebA (α1) | IPA (α2) | BTDA (α2) (b1) | EG (β1-1) | NPG (β1-2) |
| A1-1 | Molar proportion | 85.0 | 14.6 | 0.4 | 49.7 | 50.3 |
| | mass% | 58.4 | 7.9 | 0.5 | 12.2 | 21.0 |
| A1-2 | Molar proportion | 85.0 | 14.4 | 0.6 | 49.7 | 50.3 |
| | mass% | 58.3 | 7.7 | 0.8 | 12.2 | 21.0 |

(continued)

| Polyester (A) | | Polyvalent carboxylic acid (α) | | | Polyhydric alcohol (β) | |
|---|---|---|---|---|---|---|
| | | SebA (α1) | IPA (α2) | BTDA (α2) (b1) | EG (β1-1) | NPG (β1-2) |
| A1-3 | Molar proportion | 85.0 | 14.2 | 0.8 | 49.7 | 50.3 |
| | mass% | 58.3 | 7.6 | 1.0 | 12.2 | 20.9 |
| A2-1 | Molar proportion | 85.0 | 15.0 | - | 49.7 | 50.3 |
| | mass% | 58.6 | 8.1 | - | 12.2 | 21.1 |

[Table 2]

| Polyester (A) | (B) Content* (mass%) | Glass transition temperature (°C) | Crystal melting heat (J/g) | Weight average molecular weight | Polydispersity | Ester bond concentration (mmol/g) | Unsaturated group concentration (mmol/g) | Epoxy group concentration (mmol/g) | Acid value (mg KOH/g) | Hydroxyl value (mg KOH/g) | Melt viscosity (Pa·s) |
|---|---|---|---|---|---|---|---|---|---|---|---|
| A1-1 | 0.5 | -46 | 0 | 102000 | 8.9 | 8.2 | 0 | 0 | 0.1 | 6.5 | 31 |
| A1-2 | 0.8 | -46 | 0 | 127000 | 10.2 | 8.2 | 0 | 0 | 0.1 | 6.2 | 37 |
| A1-3 | 1.0 | -46 | 0 | 153000 | 12.4 | 8.2 | 0 | 0 | 0.1 | 5.9 | 58 |
| A2-1 | 0.0 | -46 | 0 | 70000 | 4.9 | 8.2 | 0 | 0 | 0.1 | 7.1 | 48 |

*Content of a structural unit derived from a compound (B) having a photoreactive group in 100 mass% of all structural units of the polyester (A)

[Table 3]

| Polyester (A) | | Polyvalent carboxylic acid (α) | | | | Polyhydric alcohol (β) | | | | | |
|---|---|---|---|---|---|---|---|---|---|---|---|
| | | SebA (α1-1) | AdA (α1-1) | SuA (α1-1) | IPA (α2) | EG (β1-1) | 1,3PG (β1-1) | 1,4BG (β1-1) | 1,6HG (β1-1) | NPG (β1-2) | TMP (β1-2) |
| A2-2 | Molar proportion | 80 | - | - | 20 | - | - | 34 | 6.1 | 58.6 | 1.3 |
| | mass% | 51.8 | - | - | 10.2 | - | - | 11.5 | 2.8 | 23.0 | 0.7 |
| A2-3 | Molar proportion | - | - | 100 | - | - | 68.7 | - | - | 30.3 | 1.0 |
| | mass% | - | - | 50.3 | - | - | 30.4 | - | - | 18.5 | 0.8 |
| A2-4 | Molar proportion | - | 92.5 | - | 7.5 | 44.1 | - | - | - | 54.4 | 1.5 |
| | mass% | - | 52.5 | - | 5.0 | 13.4 | - | - | - | 28.1 | 1.0 |

[Table 4]

| Polyester (A) | Glass transition temperature (°C) | Crystal melting heat (J/g) | Peak-top molecular weight | Number average molecular weight | Weight average molecular weight | Biomass content (%) | Ester bond concentration (mmol/g) | Unsaturated group concentration (mmol/g) | Epoxy group concentration (mmol/g) | Acid value (mg KOH/g) | Hydroxyl value (mg KOH/g) | Melt viscosity (Pa·s) |
|---|---|---|---|---|---|---|---|---|---|---|---|---|
| A2-2 | -48 | 0 | 71700 | 14900 | 86100 | 65 | 7.7 | 0.0 | 0.0 | 0.1 | 8.0 | 78 |
| A2-3 | -26 | 0 | 59000 | 11000 | 72000 | 79 | 12.0 | 0.0 | 0.0 | 0.1 | 9.2 | 67 |
| A2-4 | -41 | 0 | 25700 | 7500 | 54000 | 9 | 10.1 | 0.0 | 0.0 | 0.1 | 10.3 | 17 |

Compound (B) Having Photoreactive Group

The following compounds were provided as a compound (B) having a photoreactive group [photopolymerization initiator].

- b1-1(1): benzophenone (benzophenone-based hydrogen abstraction type photopolymerization initiator "Omnirad BP Flake" available from IGM REJINS)
- b1-1(2): 4-methylbenzophenone (benzophenone-based hydrogen abstraction type photopolymerization initiator "Omnirad 4MBZ Flakes" available from IGM REJINS)

Hydrolysis Inhibitor (E)

The following was provided as a hydrolysis inhibitor.

- E-1: bis(diisopropylphenyl)carbodiimide (monomeric carbodiimide compound "Stabaxol I Powder" available from Rhein Chemie)

Antioxidant (F)

The following was provided as an antioxidant.

- F-1: pentaerythritol tetrakis[3-(3,5-di-tert-butyl-4-hydroxyphenyl) propionate] (hindered phenol-based antioxidant "Irganox 1010" available from BASF Japan Ltd.)

Tackifier Resin (G)

The following compounds were provided as a tackifier resin.

- G-1: aromatic hydrocarbon resin (softening point 100°C, "FTR8100" available from Mitsui Chemicals, Inc.)
- G-2: terpene phenolic resin (softening point 100°C, "YS Polyster T100" available from Yasuhara Chemical Co., Ltd.)

Example 1

1 part of the hydrolysis inhibitor (E-1) and 0.1 parts of the antioxidant (F-1) were blended with 100 parts of the polyester (A1-1) produced above. They were stirred and mixed at 130°C for 1 hour to produce an active energy ray-curable composition.

Examples 2 to 8 and Comparative Examples 1 and 2

An active energy ray-curable composition was produced in the same manner as in Example 1 except for blending components as shown in Table 5.

PET Substrate Pressure-Sensitive Adhesive Sheet with Release Film on One Side

Each of the active energy ray-curable compositions of Examples 1 to 8 and Comparative Examples 1 and 2 produced above was applied to a poly(ethylene terephthalate) (PET) film (Lumirror T60 available from Toray Industries, Inc., thickness 38 μm) so that the thickness was about 25 μm, then irradiated with ultraviolet rays at a peak illumination of 150 mW/$cm^2$ and an integrated light quantity of 500 mJ or 2000 mJ with a high-pressure mercury UV irradiator, to form a pressure-sensitive adhesive layer. Thereafter, a release-treated PET film (release film) (SP-PET-01-BU available from Mitsui Chemicals Tohcello, Inc., thickness 38 μm) was attached to the pressure-sensitive adhesive layer to protect the surface of the layer, to produce a PET substrate pressure-sensitive adhesive sheet with a release film on one side.

The resulting PET substrate pressure-sensitive adhesive sheet with a release film on one side was evaluated as follows. The evaluation results are shown in Table 5 below.

Active Energy Ray Curability (Gel Fraction)

The PET pressure-sensitive adhesive sheet with a release film on one side produced above was cut into a 4 cm x 4 cm size, and the release film was peeled off. The resultant product was wrapped with a 200-mesh SUS wire net and

immersed in toluene at 23°C for 24 hours. The mass of an insoluble pressure-sensitive adhesive component remaining in the wire net relative to the mass of the pressure-sensitive adhesive component before immersion from which the mass of the PET substrate was subtracted was measured, and the mass percentage was calculated as the gel fraction (%) according to the following equation.

$$\text{Gel fraction (\%)} = \text{mass of insoluble pressure-sensitive adhesive component remaining in wire mesh after immersion/mass of pressure-sensitive adhesive component before immersion} \times 100$$

Pressure-Sensitive Adhesive Force (Peel Strength) (for SUS-BA)

A SUS-BA plate was provided as an adherend. The PET pressure-sensitive adhesive sheet with a release film on one side produced above was cut into a 25 mm x 200 mm piece in an environment of 23°C and 50% RH, then the release film was peeled off, and the pressure-sensitive adhesive layer side was pressure-bonded to the SUS-BA plate by reciprocating a 2-kg roller twice. Subsequently, the plate was allowed to stand for 30 minutes in the same atmosphere, and then the 180-degree peel strength (N/25 mm) was measured at a peel rate of 300 mm/min using an autograph (Autograph AG-X 50N available from Shimadzu Corporation).

Evaluation Criteria

◎ (excellent): Pressure-sensitive adhesive force is 5 N/25 mm or more, and no adhesive remains on the adherend
○ (very good): Pressure-sensitive adhesive force is 3 N/25 mm or more and less than 5 N/25 mm, and no adhesive remains on the adherend
Δ (good): Pressure-sensitive adhesive force is 1 N/25 mm or more and less than 3 N/25 mm, and no adhesive remains on the adherend
× (poor): Pressure-sensitive adhesive force is less than 1 N, or the adhesive remains on the adherend

Holding Force

The PET substrate pressure-sensitive adhesive sheet with a release film on one side produced above was cut into a size of 25 mm x 50 mm in an environment of 23°C and 50% RH. Then, the release film was peeled off, and the sheet was pressure-bonded (bonding area 25 mm x 25 mm) to a stainless steel plate (SUS304) by reciprocating a 2-kg roller twice, and the holding force was measured under a load of 1 kg over 24 hours in an atmosphere of 40°C using a creep tester (Holding Force Tester BE-501 with Thermo-Hygrostat, available from Tester Sangyo Co., Ltd.). The evaluation criteria are as follows.

Evaluation Criteria

○ (very good): No displacement
△ (good): Displacement of 1.0 mm or less
× (poor): Displacement of more than 1.0 mm, or fall of the pressure-sensitive adhesive sheet

Tackiness

The PET substrate pressure-sensitive adhesive sheet with a release film on one side produced above was cut into a size of 12 mm x 12 mm in an environment of 23°C and 50% RH, then the release film was peeled off, and the probe tack was measured using a probe tack tester (TE-6001 available from Tester Sangyo Co., Ltd.) with a probe diameter of 5 mm Φ, a pushing speed of 10 mm/sec, a pulling-up speed of 10 mm/sec, a pressing time of 5 seconds, and a bonding

pressure of 1000 gf/$cm^2$. The evaluation criteria are as follows.

Evaluation Criteria

◎ (excellent): 5 N or more
○ (very good): 3 N or more and less than 5 N
× (poor): less than 3 N

Environmental Load Reduction (Biomass Content)

The biomass content of the polyester-based resin (A) was calculated by the following equation and evaluated.

Biomass content (%) = [(the number of moles of carbon of plant-derived monomers calculated from a molar ratio of polyvalent carboxylic acid ($\alpha$) and polyhydric alcohol ($\beta$) in polyester (A))/(the number of moles of carbon of all constituent monomers in polyester (A))] × 100

Evaluation Criteria

◎ (excellent): 70% or more
○ (very good): 50% or more and less than 70%
△ (good): 30% or more and less than 50%
× (poor): less than 30%

Thermal Stability

Each of the active energy ray-curable compositions produced in Examples 1 to 8 and Comparative Examples 1 and 2 was subjected to a heat resistance test (temperature 200°C, 3 hours, under air conditions), the melt viscosities at 160°C before and after the heat resistance test were measured using a flow tester "CFT-500EX" (available from Shimadzu Corporation), and the rate of change in melt viscosity was calculated by the following equation and evaluated.

Rate of change in melt viscosity (%) = [(melt viscosity at 160°C after heat resistance test)/(melt viscosity at 160°C before heat resistance test)] × 100

Evaluation Criteria

◎ (excellent): more than 30% and 300% or less
○ (very good): more than 20% and 30% or less, or more than 300% and 500% or less
△ (good): more than 10% and 20% or less, or more than 500% and 1000% or less
× (poor): 10% or less, or more than 1000%

[Table 5]

| | Active energy ray-curable composition | | | | | | | | Integrated light quantity (mJ) | Gel fraction (%) | Pressure-sensitive adhesive force (N/25 mm) SUS-BA | | **Holding** force | Tackiness (N) | | Biomass content (%) | | **Thermal** stability (%) | |
|---|---|---|---|---|---|---|---|---|---|---|---|---|---|---|---|---|---|---|---|
| | Polyester (A) | | Hydrolysis inhibitor (E) | | Antioxidant (F) | | Tackifier resin (G) | | | | | | | | | | | | |
| | Type | Parts | Type | Parts | Type | Parts | Type | Parts | | | Value | Evaluation | Evaluation | Value | Evaluation | Value | Evaluation | Value | Evaluation |
| Example 1 | A1-1 | 100 | E-1 | 1 | F-1 | 0.1 | - | - | 500 | 31 | 17 | ◎ | O | 5.9 | ◎ | 72 | ◎ | 127 | ◎ |
| Example 2 | A1-1 | 100 | E-1 | 1 | F-1 | 0.1 | - | - | 2000 | 49 | 18 | ◎ | O | 6.3 | ◎ | 72 | ◎ | 127 | ◎ |
| Example 3 | A1-2 | 100 | E-1 | 1 | F-1 | 0.1 | - | - | 500 | 44 | 10 | ◎ | O | 5.0 | ◎ | 72 | ◎ | 114 | ◎ |
| Example 4 | A1-2 | 100 | E-1 | 1 | F-1 | 0.1 | - | - | 2000 | 52 | 12 | ◎ | ○ | 4.2 | ○ | 72 | ◎ | 114 | ◎ |
| Example 5 | A1-3 | 100 | E-1 | 1 | F-1 | 0.1 | - | - | 500 | 46 | 14 | ◎ | O | 5.6 | ◎ | 72 | ◎ | 110 | ◎ |
| Example 6 | A1-3 | 100 | E-1 | 1 | F-1 | 0.1 | - | - | 2000 | 56 | 11 | ◎ | ○ | 4.9 | ○ | 72 | ◎ | 110 | ◎ |
| Example 7 | A1-3 | 100 | E-1 | 1 | F-1 | 0.1 | G-1 | 10 | 500 | 34 | 16 | ◎ | O | 7.1 | ◎ | 72 | ◎ | 108 | ◎ |
| Example 8 | A1-3 | 100 | E-1 | 1 | F-1 | 0.1 | G-2 | 10 | 500 | 37 | 13 | ◎ | O | 5.7 | ◎ | 72 | ◎ | 95 | ◎ |
| Comparative Example 1 | A2-1 | 100 | E-1 | 1 | F-1 | 0.1 | - | - | 500 | 1 | 5 | × | × | 6.6 | ◎ | 72 | ◎ | 109 | ◎ |
| Comparative Example 2 | A2-1 | 100 | E-1 | 1 | F-1 | 0.1 | - | - | 2000 | 2 | 2 | × | × | 6.4 | ◎ | 72 | ◎ | 109 | ◎ |

As can be seen from the results in Table 5, the active energy ray-curable compositions and the pressure-sensitive adhesive sheets of Examples 1 to 8 had excellent active energy ray curability in spite of containing no unsaturated group and further had excellent pressure-sensitive adhesive force, holding force, tackiness, environmental load reduction effect, and thermal stability.

In contrast to this, the active energy ray-curable compositions and the pressure-sensitive adhesive sheets of Comparative Examples 1 and 2 had poor active energy ray curability and failed to satisfy the objects of the present disclosure.

Example 9

5 parts of the compound (b1-1(1)) having a photoreactive group, 1 part of the hydrolysis inhibitor (E-1), and 0.1 parts of the antioxidant (F-1) were blended with 100 parts of the polyester-based resin (A2-2) produced above. They were stirred and mixed at 130°C for 1 hour to produce an active energy ray-curable composition.

Examples 10 to 12 and Comparative Example 3

An active energy ray-curable composition was produced in the same manner as in Example 9 except for blending components as shown in Table 6.

PET Substrate Pressure-Sensitive Adhesive Sheet with Release Film on One Side

Each of the active energy ray-curable compositions of Examples 9 to 12 and Comparative Example 3 produced above was applied to a poly(ethylene terephthalate) (PET) film (Lumirror T60 available from Toray Industries, Inc., thickness 38 μm) so that the thickness was about 25 μm. Then, a release-treated PET film (release film) (SP-PET-01-BU available from Mitsui Chemicals Tohcello, Inc., thickness 38 μm) was attached to the pressure-sensitive adhesive layer to protect the surface of the layer and irradiated with ultraviolet rays at a peak illumination of 150 $mW/cm^2$ and an integrated light quantity of 3000 mJ with a high-pressure mercury UV irradiator, to produce a PET substrate pressure-sensitive adhesive sheet with a release film on one side.

The resulting PET substrate pressure-sensitive adhesive sheet with a release film on one side was evaluated as follows. The evaluation results are shown in Table 6 below.

Gel Fraction

The PET pressure-sensitive adhesive sheet with a release film on one side produced above was cut into a 4 cm x 4 cm size, and the release film was peeled off. The resultant product was wrapped with a 200-mesh SUS wire net and immersed in toluene at 23°C for 24 hours. The mass of an insoluble pressure-sensitive adhesive component remaining in the wire net relative to the mass of the pressure-sensitive adhesive component before immersion from which the mass of the PET substrate was subtracted was measured, and the mass percentage was calculated as the gel fraction (%) according to the following equation.

$$\text{Gel fraction (\%)} = \text{mass of insoluble pressure-sensitive adhesive component remaining in wire mesh after immersion} / \text{mass of pressure-sensitive adhesive component before immersion} \times 100$$

Pressure-Sensitive Adhesive Force (Peel Strength) (for SUS-BA)

A SUS-BA plate was provided as an adherend. The PET pressure-sensitive adhesive sheet with a release film on one side produced above was cut into a 25 mm x 200 mm piece in an environment of 23°C and 50% RH, then the release film was peeled off, and the pressure-sensitive adhesive layer side was pressure-bonded to the SUS-BA plate by reciprocating a 2-kg roller twice. Subsequently, the plate was allowed to stand for 30 minutes in the same atmosphere, and then the 180-degree peel strength (N/25 mm) was measured at a peel rate of 300 mm/min using an autograph (Autograph AG-X 50N available from Shimadzu Corporation) and evaluated by the following evaluation criteria.

Evaluation Criteria

◎ (excellent): Pressure-sensitive adhesive force is 5 N/25 mm or more, and no adhesive remains on the adherend
○ (very good): Pressure-sensitive adhesive force is 3 N/25 mm or more and less than 5 N/25 mm, and no adhesive remains on the adherend
Δ (good): Pressure-sensitive adhesive force is 1 N/25 mm or more and less than 3 N/25 mm, and no adhesive remains on the adherend
× (poor): Pressure-sensitive adhesive force is less than 1 N, or the adhesive remains on the adherend

Holding Force

The PET substrate pressure-sensitive adhesive sheet with a release film on one side produced above was cut into a size of 25 mm x 50 mm in an environment of 23°C and 50% RH. Then, the release film was peeled off, and the sheet was pressure-bonded (bonding area 25 mm x 25 mm) to a stainless steel plate (SUS304) by reciprocating a 2-kg roller twice, and the holding force was measured under a load of 1 kg over 24 hours in an atmosphere of 40°C using a creep tester (Holding Force Tester BE-501 with Thermo-Hygrostat, available from Tester Sangyo Co., Ltd.). The evaluation criteria are as follows.

Evaluation Criteria

○ (very good): No displacement
△ (good): Displacement of 1.0 mm or less
× (poor): Displacement of more than 1.0 mm, or fall of the pressure-sensitive adhesive sheet

Thermal Stability

A heat resistance test (temperature 200°C, 3 hours, under air conditions) was performed using the PET substrate pressure-sensitive adhesive sheet with a release film on one side that was not irradiated with ultraviolet rays. The melt viscosities at 130°C before and after the heat resistance test were measured using a flow tester "CFT-500EX" (available from Shimadzu Corporation), and the rate of change in melt viscosity was calculated by the following equation and evaluated.

Rate of change in melt viscosity (%) = [(melt viscosity at 130°C after heat resistance test)/(melt viscosity at 130°C before heat resistance test)] × 100

Evaluation Criteria

◎ (excellent): more than 30% and 300% or less
○ (very good): more than 20% and 30% or less, or more than 300% and 500% or less
△ (good): more than 10% and 20% or less, or more than 500% and 1000% or less
× (poor): 10% or less, or more than 1000%

[Table 6]

| | Active energy ray-curable composition | | | | | | | | Integrated light quantity (mJ) | Gel fraction (%) | Pressure-sensitive adhesive force (N/25 mm) | | Holding force | Thermal stability | | | |
|---|---|---|---|---|---|---|---|---|---|---|---|---|---|---|---|---|---|
| | Polyester (A) | | Compound (B) having photoreactive group | | Hydrolysis inhibitor (E) | | Antioxidant (F) | | | | Value | Evaluation | | Initial viscosity (Pa·s) | Post-test viscosity (Pa·s) | Rate of change (%) | Evaluation |
| | Type | Parts | Type | Parts | Type | Parts | Type | Parts | | | | | | | | | |
| Example 9 | A2-2 | 100 | b1-1(1) | 5 | E-1 | 1 | F-1 | 0.1 | 3000 | 45 | 10 | ◎ | ○ | 58 | 123 | 212 | ◎ |
| Example 10 | A2-2 | 100 | b1-1(2) | 5 | E-1 | 1 | F-1 | 0.1 | 3000 | 51 | 10 | ◎ | ○ | 55 | 140 | 255 | ◎ |
| Example 11 | A2-3 | 100 | b1-1(2) | 5 | E-1 | 1 | F-1 | 0.1 | 3000 | 45 | 16 | ◎ | ○ | 28 | 43 | 154 | ◎ |
| Example 12 | A2-4 | 100 | b1-1(2) | 5 | E-1 | 1 | F-1 | 0.1 | 3000 | 52 | 10 | ◎ | ○ | 12 | 17 | 142 | ◎ |
| Comparative Example 3 | A2-2 | 100 | - | - | E-1 | 1 | F-1 | 0.1 | 3000 | 0 | 7 | × | × | 78 | 125 | 160 | ◎ |

As can be seen from the results in Table 6, the active energy ray-curable compositions and the pressure-sensitive adhesive sheets of Examples 9 to 12 had excellent active energy ray curability in spite of containing no unsaturated group and further had excellent pressure-sensitive adhesive force, holding force, and thermal stability.

In contrast to this, the active energy ray-curable composition and the pressure-sensitive adhesive sheet of Comparative Example 3 had poor active energy ray curability, pressure-sensitive adhesive force, and holding force, and failed to satisfy the objects of the present disclosure.

In the above Examples, specific embodiments of the present disclosure have been described, but the above Examples are merely illustrative and are not to be construed as limiting. Various modifications apparent to those skilled in the art are intended to be within the scope of the present disclosure.

Industrial Applicability

The present composition has active energy ray curability and thus has excellent thermal stability even without having an unsaturated group, and further forms a pressure-sensitive adhesive with excellent pressure-sensitive adhesive force and holding force. In particular, the composition is useful as a solvent-free pressure-sensitive adhesive for a pressure-sensitive adhesive tape for electronic members, a pressure-sensitive adhesive tape for labels, and the like.

## Claims

1. An active energy ray-curable composition comprising a polyester (A) having a structural unit derived from a polyvalent carboxylic acid ($\alpha$) and a structural unit derived from a polyhydric alcohol ($\beta$), wherein
the polyester (A) further contains a polyester (A1) having a structural unit derived from a compound (B) having a photoreactive group.

2. An active energy ray-curable composition comprising:

   a polyester (A) having a structural unit derived from a polyvalent carboxylic acid ($\alpha$) and a structural unit derived from a polyhydric alcohol ($\beta$), and
   a compound (B) having a photoreactive group, wherein
   a content of a polymerizable unsaturated group-containing compound (C) contained in the active energy ray-curable composition is less than 15 parts by mass per 100 parts by mass of the polyester (A).

3. The active energy ray-curable composition according to claim 1, further comprising a polyester (A2) having a structural unit derived from a polyvalent carboxylic acid ($\alpha$) and a structural unit derived from a polyhydric alcohol ($\beta$), and not having a structural unit derived from a compound (B) having a photoreactive group.

4. The active energy ray-curable composition according to claim 1, wherein the compound (B) having a photoreactive group is a compound (b1) having a hydrogen abstraction type photoreactive group and/or a compound (b2) having a cleavage type photoreactive group.

5. The active energy ray-curable composition according to claim 1 or 4, wherein the structural unit derived from the compound (B) having a photoreactive group is incorporated into a main chain of the polyester (A1) via an ester bond.

6. The active energy ray-curable composition according to claim 1, wherein the compound (B) having a photoreactive group is a polyvalent carboxylic acid ($\alpha$).

7. The active energy ray-curable composition according to claim 2, wherein the compound (B) having a photoreactive group is a hydrogen abstraction type photopolymerization initiator.

8. The active energy ray-curable composition according to claim 2, wherein the compound (B) having a photoreactive group does not have a carboxy group or a hydroxy group as a functional group.

9. The active energy ray-curable composition according to claim 1 or 2, wherein the polyester (A) has a glass transition temperature of -80 to 30°C.

10. The active energy ray-curable composition according to claim 1 or 2, wherein the polyester (A) has a weight average molecular weight of 5000 to 500000.

**11.** The active energy ray-curable composition according to claim 1 or 2, wherein the polyester (A) has an unsaturated group concentration of 1 mmol/g or less.

**12.** The active energy ray-curable composition according to claim 1 or 2, wherein a rate of change in melt viscosity before and after heating at 200°C for 3 hours is from 20 to 500%.

**13.** The active energy ray-curable composition according to claim 1 or 2, wherein a content of an organic solvent in the active energy ray-curable composition is less than 10 mass%.

**14.** A pressure-sensitive adhesive being a cured product of the active energy ray-curable composition according to claim 1 or 2.

**15.** The pressure-sensitive adhesive according to claim 14, wherein the pressure-sensitive adhesive has a gel fraction of 1 to 100%.

**16.** A pressure-sensitive adhesive sheet comprising the pressure-sensitive adhesive according to claim 14.

# INTERNATIONAL SEARCH REPORT

International application No.
**PCT/JP2024/012740**

**A. CLASSIFICATION OF SUBJECT MATTER**

***C08G 63/16***(2006.01)i; ***C08G 63/185***(2006.01)i; ***C09J 11/06***(2006.01)i; ***C09J 167/00***(2006.01)i
FI: C08G63/16; C08G63/185; C09J11/06; C09J167/00

According to International Patent Classification (IPC) or to both national classification and IPC

**B. FIELDS SEARCHED**

Minimum documentation searched (classification system followed by classification symbols)

C08G63/16; C08G63/185; C09J11/06; C09J167/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | JP 58-91714 A (TOYO BOSEKI KABUSHIKI KAISHA) 31 May 1983 (1983-05-31) claims, p. 1, lower left column, p. 4, upper right column, p. 7, upper right column to p. 9, lower left column, synthesis example 1, examples 1-3 | 1, 3-6, 9-16<br><br><br>2, 7-8 |
| X<br><br><br>A | JP 2013-227468 A (UNITIKA LTD.) 07 November 2013 (2013-11-07) claims, paragraphs [0018], [0051], [0057], [0063], tables 1-3, examples, comparative examples | 2, 7-16<br><br><br>1, 3-6 |
| A | JP 4-328186 A (TOYO BOSEKI KABUSHIKI KAISHA) 17 November 1992 (1992-11-17) entire text | 1-16 |
| A | JP 2013-181080 A (UNITIKA LTD.) 12 September 2013 (2013-09-12) entire text | 1-16 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/012740**

**Box No. III Observations where unity of invention is lacking (Continuation of item 3 of first sheet)**

This International Searching Authority found multiple inventions in this international application, as follows:

Document 1: JP 58-91714 A (TOYO BOSEKI KABUSHIKI KAISHA) 31 May 1983 (1983-05-31) claims, p. 1, lower left column, p. 4, upper right column, p. 7, upper right column to p. 9, lower left column, synthesis example 1, examples 1-3

Claims are classified into the following two inventions.

(Invention 1) Claims 1, 3-6, and 9-16

Document 1 discloses a UV-curable resin composition (in particular, claims, synthesis example 1, examples 1-3) using a saturated copolymerized polyester (A) containing 50 mol% terephthalic acid, 50 mol% isophthalic acid, 39 mol% ethylene glycol, 59 mol% 1,6-hexanediol, and 2 mol% N,N'-bis-(β-hydroxyethyl) benzophenone tetracarboxylic acid. Claim 1 lacks novelty in light of document 1, and thus do not have a special technical feature. However, claim 3 dependent on claim 1 has a special technical feature of further comprising "a polyester (A2) having a structural unit derived from a polyhydric carboxylic acid (α) and a structural unit derived from a polyhydric alcohol (β) and not having a structural unit derived from a compound (B) having a photoreactive group". Therefore, claims 1 and 3 are classified as invention 1.

Also, claims 4-6 and 9-16 are dependent on claim 1 and inventively related to claim 1, and thus the portions, which directly or indirectly recite claim 1, in claims 4-6 and 9-16 is classified as invention 1.

(Invention 2) Claims 2 and 7-16

It cannot be said that claims 2 and 7-8 have a special technical feature identical or corresponding to that of claim 3 classified as invention 1.

In addition, claims 2 and 7-8 are not dependent on claim 1. Also, claims 2 and 7-8 are not substantially identical to or similarly closely related to any of the claims classified as invention 1.

Thus, claims 2 and 7-8, and parts which directly or indirectly refer to claim 2 in claims 9-16 are not classified as invention 1, thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2024/012740**

| Patent document cited in search report | Publication date (day/month/year) | Patent family member(s) | Publication date (day/month/year) |
| --- | --- | --- | --- |
| JP 58-91714 A | 31 May 1983 | (Family: none) | |
| JP 2013-227468 A | 07 November 2013 | (Family: none) | |
| JP 4-328186 A | 17 November 1992 | (Family: none) | |
| JP 2013-181080 A | 12 September 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009102476 A
- JP 2009209279 A
- JP 2010059336 A
- JP 2022535379 A


### Non-patent literature cited in the description


- Tennen Hohshasei Tanso C-14 wo Mochiita Baionenryo no Yurai Hanbetsu Gijutsu (Techniques for Determining Origin of Biofuels Using Natural Radioactive Carbon C-14). *Tokyo Metropolitan Industrial Technology Research Institute Research Report*, 2009 (4)